(19) Europäisches Patentamt
European Patent Office
Office européen des brevets

(11) **EP 2 697 315 B1**

(12) **FASCICULE DE BREVET EUROPEEN**

(45) Date de publication et mention de la délivrance du brevet:
**29.11.2017 Bulletin 2017/48**

(21) Numéro de dépôt: **12723723.8**

(22) Date de dépôt: **12.04.2012**

(51) Int Cl.:
**C09C 1/48** *(2006.01)*    **C10J 3/00** *(2006.01)*

(86) Numéro de dépôt international:
**PCT/FR2012/050808**

(87) Numéro de publication internationale:
**WO 2012/140375 (18.10.2012 Gazette 2012/42)**

(54) **METHODE D'OBTENTION DE NOIR DE CARBONE A PARTIR DE DECHETS DE CAOUTCHOUC ET SON DISPOSITIF**

VERFAHREN ZUR GEWINNUNG VON RUSS AUS GUMMIABFÄLLEN UND VORRICHTUNG DAFÜR

METHOD FOR OBTAINING CARBON BLACK FROM RUBBER WASTE AND DEVICE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2011 BY 20110480**
**26.04.2011 BY 20110536**

(43) Date de publication de la demande:
**19.02.2014 Bulletin 2014/08**

(73) Titulaire: **Alpha Recyclage Franche Comte**
**39100 Brevans (FR)**

(72) Inventeurs:
• **PECH, Jean-louis**
**F-31200 Toulouse (FR)**
• **KALATSKI, Nikolaï Ivanovitch**
**Minsk 220002 (BY)**

(74) Mandataire: **Cabinet Morelle & Bardou SC**
**Parc Technologique du Canal**
**9, avenue de l'Europe**
**BP 72253**
**31522 Ramonville Saint Agne Cedex (FR)**

(56) Documents cités:
**EP-A2- 0 693 539    RU-C2- 2 276 170**

**Description**

La présente invention a trait au domaine du traitement des déchets et peut être utilisée dans l'industrie chimique pour la production de noir de carbone, mais également dans l'industrie du caoutchouc pour l'obtention de composants à base de mélanges de caoutchouc.

Plusieurs méthodes de traitement de pneus usagés ont été décrites dans l'art antérieur. En particulier, le brevet US 5,087,436 présente une méthode par pyrolyse sous vide pour l'obtention de suie carbonique avec des températures comprises entre 490 et 510 °C, une pression absolue de 5 kPa, une absorption d'iode comprise entre 0,13 - 0,15 kg/kg, un nombre d'huile de dibutylphtalate (80 - 100) compris entre 10 et 5 m$^3$ /kg et un nombre de capacité colorante compris entre 55 et 63.

La méthode décrite dans ce brevet présente plusieurs inconvénients parmi lesquels des dépenses énergétiques importantes au cours de la mise en oeuvre du procédé et une introduction complexe des déchets dans le réacteur en raison de la nécessité de créer et de maintenir le vide dans la chambre de combustion.

Une autre méthode de traitement thermique des pneus usagés et son dispositif de mise en oeuvre sont décrits dans le brevet RU 2269415, assurant l'obtention de résidus solides de carbone (suie) avec les caractéristiques suivantes : nombre d'iode (ml/100g) - 112, transmission de la lumière de l'extrait toluénique (%) - 98, absorption de phtalate de dibutyle (ml/100 g) - 93.

Cette méthode consiste en une pyrolyse des pneus usagés dans un réacteur à des températures comprises entre 550 et 800 °C dans un milieu de gaz de réduction obtenu par un générateur de gaz de réduction par la combustion des gaz contenant les hydrocarbures et la séparation des produits de la pyrolyse. Au minimum, une partie des produits gazeux de pyrolyse qui sortent du réacteur avec les vapeurs des hydrocarbures liquides, est amenée dans le générateur de gaz de réduction et l'unité de chaleur. Au minimum, une partie des fumées qui sortent de l'unité de chaleur est amenée dans le générateur de gaz de réduction et dans le réacteur.

L'unité pour le traitement thermique des pneus usagés permettant de mettre en oeuvre cette méthode comprend un réacteur, un système d'évacuation des gaz qui se forment dans le réacteur, un générateur de gaz de réduction branché au réacteur, un système d'amenée des pneus broyés et un récepteur pour les résidus solides de pyrolyse. L'unité est équipée d'un dispositif de chauffage avec des moyens de sortie des gaz de fumées, le système d'évacuation des gaz formés dans le réacteur étant branché au générateur des gaz de réduction et au réacteur.

Les inconvénients liés à cette méthode résident dans les dépenses énergétiques importantes pour la mise en oeuvre du procédé en raison de la nécessité de produire un gaz de réduction par combustion incomplète des hydrocarbures, ainsi que l'introduction complexe des déchets dans le réacteur.

Le brevet RU 2174911 décrit encore une méthode de traitement de déchets de caoutchouc, comprenant leur décomposition thermique dans un milieu vapeur-gaz, la séparation des produits de décomposition en produits solides et gazeux, l'amenée des produits solides de décomposition dans un four d'activation avec l'amenée simultanée dans un four de la vapeur d'eau en quantité comprise entre 0,8 et 1.6 kg par kilogramme de produits solides de décomposition, l'évacuation du four d'activation du mélange gazeux avec un rapport de masse dans le mélange compris entre 3 et 0,6 de vapeur d'eau et 1 de gaz d'activation et leur utilisation en qualité du milieu vapeur-gaz pour la décomposition des déchets, l'amenée dans le four d'activation simultanément avec l'amenée des produits solides de décomposition et de la vapeur d'eau des déchets de caoutchouc en quantité comprise entre 0,05 et 0,20 kg des déchets pour 1 kg de produits solides, conduisant à l'obtention de charbon activé.

Les inconvénients liés à cette méthode comprennent une consommation d'énergie importante au cours de la mise en oeuvre du procédé et des rejets importants de produits de combustion nocifs dans l'environnement.

Le brevet RU 2139187 présente une méthode de traitement thermique des pneus usagés au cours de laquelle les pneus sont chargés dans un réacteur où la matière subit une pyrolyse à des températures comprises entre 550 et 800 °C en présence d'un gaz réducteur selon un rapport gaz réducteur/matière de 0,20 - 0,45: 1. Les produits de pyrolyse sont ensuite séparés et les résidus solides sont déchargés. Une fois la pyrolyse achevée, de la vapeur surchauffée à températures comprises entre 250 et 300 °C est introduite en quantités comprises entre 0,03 - 0,12: 1 par rapport à la matière chargée. Le gaz réducteur est obtenu par combustion incomplète des hydrocarbures *a*= 0,4 - 0,85.

Cette méthode présente cependant plusieurs inconvénients. Elle s'accompagne en effet d'une consommation élevée d'énergie, notamment en raison de la nécessité d'obtenir le gaz réducteur par combustion incomplète des hydrocarbures. Des rejets gazeux nocifs pour l'environnement sont émis à l'issue de la combustion incomplète de ces hydrocarbures. Une suie de qualité relativement faible est obtenue par rapport à la quantité importante de cendre (8-14 mass. %), l'élimination de cette suie n'est en outre pas réalisée dans le cadre de cette méthode. Pour cette raison, une purification supplémentaire de la suie provenant de la cendre est nécessaire, ce qui entraîne des coûts énergétiques supplémentaires.

Une méthode de production de carbone technique, de composants de combustibles d'hydrocarbure et de matières premières pour l'industrie chimique à partir des déchets industriels et ménagers contenant du caoutchouc est décrite dans le brevet RU 2352600. Cette méthode consiste en une thermolyse de granulats de caoutchouc fluidisé dans un flux vertical d'agent dissolvant, liquéfiant le mélange d'hydrocarbures contenant de l'alkyle-aromatique. Le dissolvant circule entre les granulats de caoutchouc et le carbone technique. Les produits de thermolyse sont séparés du carbone technique. La thermolyse est réalisée à des températures comprises entre 320 et 420 °C, avec des pressions comprises entre 3,8 et 4,2 Mpa et selon des proportions de masse de dissolvant par rapport aux granulats de caoutchouc supérieures ou égales à 1,0. Dans cette méthode, le dissolvant est à la fois un agent liquéfiant et un agent caloporteur, emportant tous les produits de la thermolyse dans le flux commun du réacteur. Le carbone technique obtenu présente une composition proche de la composition de la suie utilisée dans la production du caoutchouc.

Cette méthode présente également des inconvénients. Une forte consommation d'énergie est liée à la création de la couche fluidisée par pompage de l'agent caloporteur-dissolvant par le granulat de caoutchouc et le carbone technique, ainsi qu'à la régénération de l'agent caloporteur-dissolvant, impliquant la séparation du dernier des produits de thermolyse des déchets. Des rejets importants de fumées dans l'environnement sont générés. La qualité relativement faible du carbone technique obtenu, qui se rapproche de la suie utilisée pour la production du caoutchouc, mais qui ne peut pas être considérée comme son substitut complet, étant donné qu'il contient une grande quantité de cendre sous forme d'oxydes de zinc, de fer, de silicium etc...

Une autre méthode de production de suie est décrite dans le brevet RU 747868. Cette méthode consiste en une pyrolyse des matières premières solides d'hydrocarbures (déchets des compositions polymériques) à des températures comprises entre 400 et 1500 °C, avec formation de résidus carboniques, dégagement de produits vapeur-gaz et broyage des résidus carboniques dans le flux des produits vapeur-gaz à des températures comprises entre 350 et 400 °C, la pyrolyse des déchets étant réalisée par le mélange vapeur-gaz, qui est composé en vol.%:

| | |
|---|---|
| Vapeur d'eau surchauffée | 35 - 50 |
| Bioxyde de carbone | 5 - 10 |
| Oxyde de carbone | 1 - 3 |
| Oxygène | 0,1 - 2,0 |
| Azote | le reste |

Les produits vapeur-gaz de pyrolyse des déchets sont soumis une décomposition thermique à des températures comprises entre 1400 et 1500 °C.

Les inconvénients liés à cette méthode résident dans une consommation importante d'énergie, résultant notamment des hautes températures utilisées au cours de la pyrolyse (jusqu'à 1500 °C). Des rejets importants d'éléments nocifs pour l'environnement sont émis suite à la décomposition thermique des produits vapeur-gaz. La suie obtenue présente une qualité relativement faible, en raison de la quantité importante des impuretés sous forme de cendre. EP 0 693 539 divulgue un procédé de production de noir de carbone, qui comprend les étapes consistant à brûler partiellement et gazéifier les déchets organiques dans un mélange gazeux d'un gaz contenant de l'oxygène et de vapeur avec un rapport d'équivalents d'oxygène des déchets étant de 1 ou moins, partiellement brûler le gaz combustible résultant à une température de 1000 °C ou au-dessus dans un environnement pauvre en oxygène contenant moins une quantité stoechiométrique d'oxygène, et la trempe du gaz de combustion partiel résultant dans une atmosphère inerte.

Une autre méthode se rapprochant de l'invention envisagée est décrite dans le brevet RU 2276170. Cette dernière méthode comprend la décomposition thermique de déchets dans un réacteur dans un milieu vapeur-gaz, la séparation des produits de décomposition en produits vapeur-gaz et en résidu carbonique solide, le broyage des résidus carboniques. L'huile est extraite des produits vapeur-gaz par condensation, puis elle subit une décomposition thermique en suie et en gaz à la température de 900 - 2000 °C. Les produits vapeur-gaz après le dégagement de l'huile sont brûlés ensemble avec les résidus carboniques et par filtration des produits de combustion, on obtient la suie.

La combustion des produits vapeur-gaz après séparation de l'huile ensemble avec les résidus carboniques broyés est réalisée avec un coefficient d'excès d'air compris entre 0,4 et 0,9, conduisant à une suie, ou noir de carbone, de moindre qualité ce qui résulte des pertes importantes en dioxyde de carbone liées aux taux élevés en oxygène au cours de la combustion.

Au préalable, avant le broyage des résidus carboniques, on extrait des résidus de carbone le métal par séparation magnétique.

Les gaz de la décomposition thermique de l'huile sont brûlés et les produits de combustion sont utilisés en qualité d'agent caloporteur pour le chauffage extérieur du réacteur.

Les inconvénients liés à cette méthode résident là encore dans la consommation spécifique élevée d'énergie pour la production de 1 kg de suie, la quantité importante de résidus de carbone brûlés sans formation de suie au cours de la combustion commune avec les produits vapeur-gaz. L'introduction complexe des déchets dans le réacteur en raison de la nécessité d'extraire l'huile des produits vapeur-gaz au moyen d'un équipement spécial. Les rejets importants de produits nocifs de combustion dans l'environnement, provoqués par une grande quantité de matières brûlées : les gaz de la décomposition thermique de l'huile, les produits vapeur-gaz, une partie des résidus de carbone broyés. La qualité relativement faible du noir de carbone obtenu, suite à la combustion d'une partie des résidus de carbone broyés, la proportion de carbone dans la suie qui se forme se réduisant et la teneur en cendres augmentant.

La présente invention vise à pallier les inconvénients de l'art antérieur, notamment en réduisant la consommation d'énergie pour la production de noir de carbone et en simplifiant l'introduction des déchets dans le réacteur. La présente invention vise également à diminuer la quantité de rejets nocifs dans l'environnement et améliorer la qualité du noir de carbone obtenu à partir des déchets de caoutchouc, en réduisant le taux de cendre résiduel présent dans le noir de carbone et en diminuant également les résidus minéraux toxiques tels que le soufre, la silice et les oxydes de zinc.

A cet effet, la présente invention propose une méthode d'obtention de noir de carbone à partir de déchets de caoutchouc, comprenant leur décomposition thermique dans un réacteur, la séparation des produits de décomposition en produits vapeur-gaz et en résidus solides carboniques, le broyage des résidus de carbones, la combustion des produits vapeur-gaz avec les résidus de carbone broyés par la voie de l'amenée dans la chambre de combustion des produits vapeur-gaz, le rapport de consommation de masse des produits vapeur-gaz et des résidus de carbone broyés étant compris entre 1: (0,1 - 2).

De manière avantageuse, au cours de la méthode d'obtention de noir de carbone selon la présente invention, les produits vapeur-gaz sont brûlés avec les résidus de carbone broyés sous une forme gazeuse ou sous une forme liquide après condensation.

Les produits vapeur-gaz se formant au cours de la décomposition thermique des déchets de caoutchouc contiennent des hydrocarbures et de la vapeur d'eau. La chaleur de combustion spécifique des produits vapeur-gaz varie en fonction de la teneur en vapeur d'eau dans les limites de 15000 à 40000 kJ/kg. Ces produits sont donc des gaz combustibles.

La combustion de ces produits avec un manque d'air conduit à la formation d'un noir de carbone de meilleur qualité, parfois appelé par abus de langage suie. La présence de vapeur d'eau améliore les caractéristiques de qualité de la suie en augmentant la surface spécifique résultant de la réaction entre la vapeur d'eau et le noir carbone (ou suie) qui se forme. Ainsi, lors de la combustion des produits vapeur-gaz, il y a activation de la suie qui se forme.

L'amenée des résidus carboniques broyés dans la chambre de combustion par l'intermédiaire des produits vapeur-gaz permet d'éliminer des résidus des sulfures et des produits volatils (composés de résine formés pendant la décomposition thermique des déchets de caoutchouc, et qui s'accumulent dans les résidus solides). La calcination des particules de carbone entraîne la fissuration et le broyage de celles-ci. Ce phénomène conduit à la séparation de la cendre du carbone (destruction des conglomérats de carbone - cendre). Cela permet à l'étape suivante d'enrichir les résidus de carbone en retirant les cendres dégagées, c'est-à-dire de réduire la teneur en cendres et d'améliorer la qualité du noir de carbone obtenu selon la présente invention.

Les particules de résidus de carbone passent dans la chambre de combustion sous l'effet des produits vapeur-gaz et sont exposées à une température supérieure à 1000° C. Cette chaleur importante et rapide entraîne des réactions entre la vapeur d'eau des produits vapeur-gaz et les particules du résidu de carbone avec la formation d'hydrogène et d'oxyde de carbone ainsi que l'augmentation de la surface spécifique du noir de carbone.

Les résidus de carbone broyés peuvent être fournis dans la chambre de combustion sous l'effet des produits vapeur-gaz selon certaines limites. L'amenée des résidus de carbone en quantité inférieure à 0,1 kg sur 1 kg de produits vapeur-gaz brûlés (rapport de masse inférieur à 1:0,1) provoque une réduction brusque de la quantité de noir de carbone qui se forme. L'amenée des résidus de carbone dans la chambre de combustion en quantité supérieure à 2 kg sur 1 kg de produits vapeur-gaz brûlés (rapport de masse supérieur à 1:2) provoque le dépôt des particules de carbone broyées dans la chambre de combustion, la réduction brusque de la température dans la chambre (les particules de carbone sont introduites dans la chambre avec une température inférieure à 400 °C) et la réduction de la réaction de combustion, d'où résulte une baisse de la production et de la qualité de noir de carbone qui se forme.

Dans un mode de réalisation préféré de l'invention, les produits vapeur-gaz condensés sous forme liquide sont séparés en une première fraction présentant un point d'ébullition inférieur ou égal à 360 °C et en une deuxième fraction présentant un point d'ébullition supérieur à 360 °C, la première fraction étant mélangée avec les résidus de carbone broyés dans un rapport de 1: (0,1- 2,0), le mélange obtenu étant brûlé, les produits de combustion étant séparés par voie mécanique dans un champ centrifuge en suie et en cendre.

La séparation de l'huile en une première fraction avec une température d'ébullition inférieure ou égale à 360 °C permet d'obtenir un liquide présentant une viscosité faible, ce qui permet d'assurer l'imprégnation par ce liquide des particules de la fraction carbonique broyée par remplissage des pores desdites particules. L'imprégnation des particules des résidus carboniques par l'huile directement séparée des produits vapeur-gaz, n'est pas possible, cette huile ayant une viscosité élevée et ne pouvant pratiquement pas pénétrer dans les pores des particules.

La séparation de l'huile en une deuxième fraction avec une température d'ébullition supérieure à 360 °C permet d'obtenir des matières premières de qualité pour la production de noir de carbone, cette fraction présentant un rapport d'hydrogène au carbone optimal pour assurer un rendement de production de noir de carbone de haute qualité au cours de la décomposition thermique de cette fraction.

La décomposition thermique de l'huile directement séparée des produits vapeur-gaz ne permet pas d'obtenir un noir de carbone de qualité selon un rendement important, cette fraction contenant de l'hydrogène et du carbone en quantités telles que le rapport d'hydrogène au carbone n'est pas optimal pour l'obtention de noir de carbone.

Le mélange de la première fraction avec les résidus carboniques broyés permet d'obtenir une suspension combustible contenant une fraction liquide libre et des particules de résidus carboniques distribuées d'une manière régulière dans le volume de cette fraction. De cette manière, les particules de résidus carboniques sont imprégnées par la première fraction liquide, les pores des particules de carbone sont remplis par la fraction liquide.

Lors de combustion de cette suspension, la fraction liquide libre brûle tout d'abord, entraînant la formation d'une torche de produits chauds de combustion. Les particules de carbone sont chauffées par irradiation de la torche chaude, ce qui provoque l'évaporation de la fraction liquide contenue dans les pores des particules. Les paires de la fraction liquide qui se forment dans les canaux des pores du volume des particules sous l'influence d'un gradient de pression (l'évaporation de la fraction liquide à l'intérieur des particules de résidus carboniques entraîne une augmentation de la pression) passent vers la surface des particules, se mélangent avec l'air amené pour la combustion de la suspension et brûlent.

La combustion des vapeurs à la surface des particules prévient la combustion du carbone des particules. Ce phénomène assure la conservation du noir carbone qui dans notre cas est le produit désiré, c'est à dire le noir de carbone. Simultanément, suite au phénomène de montée de la pression à l'intérieur des particules des résidus de carbone, celles-ci sont détruites (par fragmentation) en particules plus fines, engendrant un broyage supplémentaire des résidus carboniques. A l'issue de ce broyage supplémentaire, il y séparation des particules de carbone des particules de cendre. On sait qu'au cours du procédé de pyrolyse des déchets de caoutchouc, une partie des cendres (oxydes du zinc, de silicium, de fer etc.) forme des conglomérats (compositions mécaniques) avec les particules de carbone pur.

Pour obtenir une destruction mécanique de ces conglomérats (séparation des particules de carbone des cendres) il faut réaliser un broyage assez fin des résidus carboniques, ce qui entraîne une consommation importante d'énergie. Pour autant, la destruction mécanique des conglomérats de cendre et de carbone est nécessaire pour la séparation complète suivante des résidus de carbone en carbone pur et en cendre.

Cette séparation peut être réalisée par des méthodes mécaniques, c'est-à-dire par voie de séparation, la densité des particules de cendre étant considérablement supérieure à la densité des particules de carbone ; par exemple la densité de l'oxyde de zinc est de 5700 kg /m3, et la densité du carbone est de 2265 kg/m3.

Pour l'obtention de la suspension combustible, on mélange la première fraction avec les résidus de carbone broyés en proportion de poids 1:0,1, donc 1,1 kg de la suspension doit contenir au moins 0,1 kg de résidus de carbone et 1,0 kg de la première fraction. En cas de teneur plus faible en particules dans la suspension, leur uniformité de distribution dans le volume est perturbée, ce qui provoque une combustion irrégulière de la suspension (la flamme sera plus ou moins perturbée en fonction de la quantité de la fraction liquide libre dans la suspension qui passera par l'injecteur, celle-ci étant plus ou moins grande en fonction du temps).

En cas de teneur plus faible en particules de carbone dans la suspension, il y aura moins de noir de carbone, et la consommation de la fraction liquide brûlée augmentera, ce qui provoquera une augmentation de la consommation énergétique pour la production de noir de carbone et une augmentation des rejets de produits de combustion dans l'environnement.

La combustion d'une suspension avec une proportion de poids de la fraction liquide et des particules de résidus de carbone supérieure à 1:2 entraîne une perturbation du procédé de combustion de cette suspension en raison de la faible teneur de la fraction liquide libre. Dans ce cas, l'utilisation d'une suspension comprenant pour 1 kg de fraction liquide libre, plus de 2 kg de particules de résidus carboniques, entraîne une perturbation du procédé de combustion, une perturbation du procédé du traitement thermique des particules du carbone et une moins bonne qualité de noir de carbone obtenu. La combustion d'une telle suspension provoque une usure importante par abrasion de l'équipement (injecteurs), et aussi à une combustion élevée du carbone.

De manière avantageuse, la deuxième fraction est soumise à une décomposition thermique en suie et en gaz selon des températures comprises entre 850 à 2100°C.

La décomposition thermique de la deuxième fraction d'huile est réalisée à des températures comprises entre 850 et 2100 °C dans le cadre de la présente invention. A des températures inférieures à 850 °C, la deuxième fraction d'huile n'est quasiment pas soumise à une décomposition avec formation de noir de carbone. L'élévation de la température à plus de 2100 °C entraîne la décomposition d'une partie importante de l'huile avec formation de graphite, se traduisant par une diminution sensible de la formation de noir de carbone de qualité.

Dans un mode de réalisation particulier de l'invention, la combustion du mélange de la première fraction et des résidus de carbone est réalisée avec un coefficient d'excès d'air compris entre 0,20 et 0,35. L'expression « coefficient d'excès d'air » doit ici être comprise de manière relative, s'agissant en l'espèce d'un taux réduit en air par rapport au taux normal (coefficient égal à 1).

Pendant la combustion de la suspension, l'air doit être amené en quantité de 0,20 à 0,35 par rapport à la quantité théoriquement nécessaire pour cette suspension, ce qui est déterminé par les méthodes spéciales de calcul tenant compte de la capacité thermique spécifique de la suspension et de la teneur des éléments combustibles (hydrogène, carbone, soufre). De cette manière, on tient compte du fait que le carbone ne doit pratiquement pas être brûlé, sa combustion (oxydation) menant à la réduction du rendement de formation du noir de carbone et à la diminution de sa qualité en raison de l'oxydation des particules de carbone.

La réduction de la quantité d'air fournie lors de la combustion de la suspension à des valeurs inférieures à 0,20 par rapport à la quantité théoriquement nécessaire entraîne l'impossibilité d'allumage et de combustion de la suspension et l'arrêt du procédé d'obtention de noir de carbone.

L'augmentation de la quantité d'air fournie lors de la combustion de la suspension à des valeurs supérieures à 0,35 par rapport à la quantité théoriquement nécessaire entraîne une augmentation de la quantité de carbone brûlé, provoquant une réduction de la formation de noir de carbone et une diminution de sa qualité suite à l'oxydation de la surface des particules de carbone, ainsi qu'une augmentation de la quantité de chaleur émise, ce qui provoquera le sur chauffage du système de combustion de la suspension et la détérioration de sa capacité de travail.

De préférence, au cours de la méthode d'obtention de noir de carbone selon la présente invention, les résidus de carbone sont broyés pour obtenir des particules de dimensions comprises entre 0,1 et 2,0 mm.

Le broyage des résidus carboniques en particules de dimensions inférieures à 0,10 mm s'accompagne d'une augmentation de consommation d'énergie. Avec de telles dimensions, les particules présentent une haute capacité réactive due à leur grande surface spécifique, ce qui entraîne leur combustion intense dans la chambre de combustion, et donc la perte du produit de valeur, c'est à dire le noir de carbone.

L'amenée dans la torche turbulente de particules présentant des dimensions supérieures à 2,0 mm empêche ces dernières d'être chauffées à haute température. Il en résulte une élimination incomplète des particules volatiles, ce qui se traduit par une qualité réduite du noir de carbone obtenu. En outre, les particules présentant des dimensions supérieures à 2 mm se déposent intensément dans la chambre de combustion (en tombant de la torche turbulente sur les parois de la chambre). Il en résulte une détérioration du procédé de combustion, une réduction de la quantité et de la qualité du noir de carbone formé, mais aussi une obstruction de la chambre de combustion (par les particules déposées).

Dans un mode de réalisation particulier de l'invention, tout ou partie des résidus de carbone broyés est transportée dans la chambre de combustion par l'intermédiaire des produits vapeur-gaz.

Tout ou partie des résidus carboniques broyés est fournie dans la chambre de combustion via le brûleur turbulent par transport de gaz. Cette méthode de l'amenée des résidus carboniques via le courant de gaz turbulent ne perturbe pas le fonctionnement hydrodynamique de la torche turbulente de combustion, celle-ci résultant de la combustion des produits vapeur-gaz à l'aide des brûleurs installés tangentiellement et de manière diamétralement opposée dans la chambre de combustion. En cas de perturbation de l'équilibre hydrodynamique de la torche turbulente, le procédé de combustion est également perturbé, ce qui réduit la quantité et la qualité du noir de carbone produit et augmente la quantité de produits d'hydrocarbures combustibles, entraînant, in fine, une augmentation de la consommation d'énergie pour la production de noir de carbone.

L'alimentation du four cylindrique par le brûleur turbulent installé à l'extrémité de l'axe de la chambre de combustion des produits vapeur-gaz conduit à un certain nombre d'effets positifs, parmi lesquels on peut citer le maintien du bon fonctionnement de la torche turbulente de combustion, la prévention du dépôt des particules de carbone dans la chambre de combustion, l'élimination plus complète des particules de noir de carbone de la chambre de combustion dans la chambre de réaction, participant à une amélioration des propriétés du noir de carbone ainsi formé.

L'utilisation d'une partie des produits vapeur-gaz en qualité de moyen de transport de gaz permet de prévenir l'inflammation prématurée des résidus carboniques (avant l'amenée dans la chambre de combustion). L'utilisation de tout autre gaz inerte pour le transport gazeux des particules et leur amenée dans la chambre de combustion perturberait le procédé de combustion dans la torche turbulente, engendrant la détérioration de l'équilibre des composants combustibles. L'utilisation de l'air pour le transport gazeux n'est pas possible en raison de l'inflammation des particules de carbone avant leur amenée dans la chambre de combustion (la température d'inflammation du carbone à l'air est proche de 150 °C).

De manière avantageuse, les gaz provenant de la décomposition thermique de la deuxième fraction et les produits de combustion du mélange sont brûlés ensemble avec les produits vapeur-gaz, et l'énergie thermique obtenue est utilisée pour assurer la décomposition thermique des déchets de caoutchouc dans le réacteur.

Au cours de la décomposition thermique de la deuxième fraction, outre la formation de suie, il y a formation de produits gazeux combustibles de décomposition, qu'il faut utiliser pour éviter leur rejet dans l'atmosphère. C'est pourquoi ces gaz de décomposition thermique sont brûlés avec les produits vapeur-gaz, ce qui permet d'obtenir une énergie supplémentaire pour assurer la décomposition thermique des déchets dans le réacteur. Le mélange des gaz de décomposition thermique de la deuxième fraction et des produits vapeur-gaz engendre une diminution de la toxicité des gaz de décomposition thermique grâce à la réaction entre les composants du mélange (gaz et produits vapeur-gaz), ce qui permet d'augmenter la sûreté de combustion des gaz de décomposition thermique.

La présente invention concerne également un dispositif pour l'obtention de noir de carbone à partir de déchets de caoutchouc, comprenant un réacteur présentant une sortie pour les résidus de carbone connectée consécutivement à un échangeur thermique à vis, un séparateur magnétique, un broyeur, un convoyeur, une trémie avec doseur, un échangeur thermique tubulaire, un brûleur turbulent installé au bout d'un four cylindrique sur l'axe d'une chambre de combustion, une sortie pour les produits vapeur-gaz du réacteur étant connectée aux brûleurs du four cylindrique installés tangentiellement et de manière diamétralement opposée à la chambre de combustion, ladite sortie étant également connectée consécutivement à l'échangeur thermique de la trémie avec le doseur et au brûleur turbulent.

La connexion de la sortie des produits vapeur-gaz du réacteur directement aux brûleurs du four, installés tangentiellement et de manière diamétralement opposée dans la chambre de combustion, permet d'empêcher le refroidissement des produits vapeur-gaz et de les amener à température élevée dans le brûleur. Cela prévient la condensation de la vapeur d'eau et d'une partie des produits vapeur-gaz et empêche le dépôt de condensats sur les éléments de la structure du dispositif (tuyauterie etc.) avant l'entrée dans le brûleur. Le dépôt d'une partie des produits vapeur-gaz lors de leur refroidissement dans la tuyauterie ou d'autres éléments du dispositif entraînerait en effet une baisse de la chaleur de combustion spécifique des produits vapeur-gaz amenés dans le brûleur, ce qui pourrait perturber le procédé de combustion. En outre, le dépôt d'une partie des produits vapeur-gaz avant leur amenée dans le brûleur conduit à une réduction de la quantité du noir de carbone formé, c'est à dire à la perte du produit de valeur.

La connexion de la sortie des produits vapeur-gaz du réacteur avec l'échangeur de chaleur de la trémie et le doseur permet d'utiliser une partie des produits vapeur-gaz pour le transport du carbone broyé dans le brûleur. De cette manière, l'utilisation de l'échangeur de chaleur permet de chauffer les résidus carboniques broyés via le flux des produits vapeur-gaz, empêchant le refroidissement de ces derniers et la condensation d'une partie de ceux-ci. La condensation d'une partie des produits vapeur-gaz sur les particules du résidu de carbone conduit au dépôt de composants résineux sur les surfaces des particules, leur agglutination et empêche le transport avec le flux des produits vapeur-gaz, par le dépôt sur les parois de l'échangeur de chaleur, ce qui réduit l'efficacité du système de transport gazeux et empêche l'amenée du résidu carbonique dans le brûleur turbulent.

La connexion du broyeur avec l'échangeur de chaleur à vis et le séparateur magnétique à la sortie du réacteur permet le broyage des résidus de carbone sous l'influence de la vis ainsi que le refroidissement des résidus de carbone. Ceci permet également de retirer le métal des résidus de carbone, d'une part pour éviter tout dysfonctionnement du broyeur, mais aussi pour éviter l'introduction de particules fines de métal dans le four cylindrique, ce qui conduirait inévitablement au souillage du noir de carbone par les particules de métal.

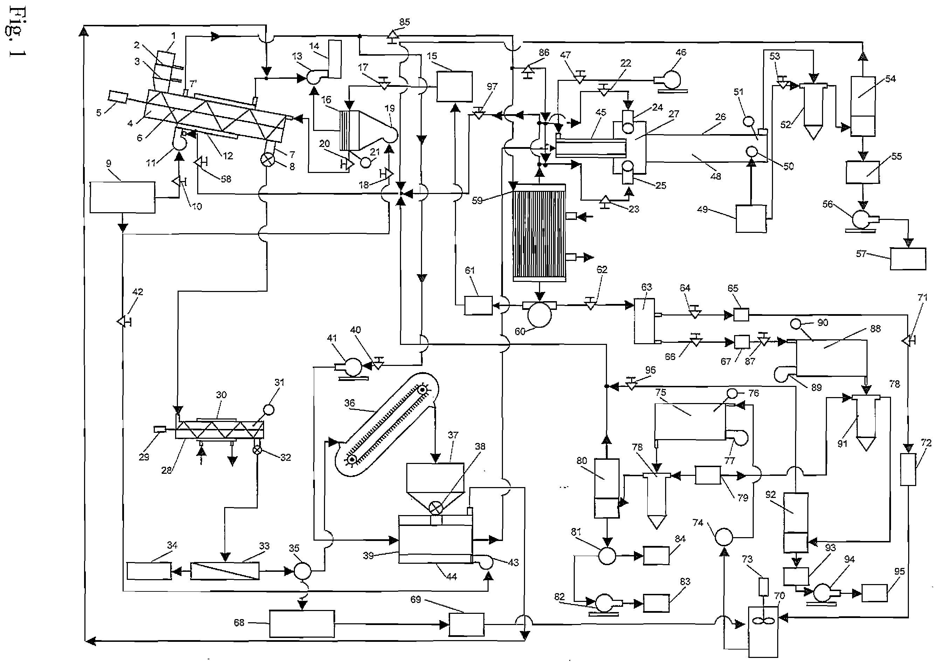

La figure 1 présente le plan de l'installation permettant de mettre en oeuvre la méthode d'obtention de noir de carbone à partir des déchets de caoutchouc selon l'invention.

Le dispositif selon l'invention comprend une trémie 1, équipée de fermetures 2 et 3, un réacteur cylindrique 4 avec un moteur 5, branché à une vis 6, deux sorties 7 et 7' avec un mécanisme de fermeture rotative 8, branché au réacteur, un réservoir à combustible 9, branché par un robinet régulateur 10 à un brûleur 11, un enveloppe 12, installée sur le réacteur 4, un aspirateur de fumées 13, branché à une cheminée 14, un générateur de vapeur 15, un surchauffeur de vapeur 16, des robinets 17 et 18, un brûleur 19, un robinet 20, un capteur de température de vapeur 21, des robinets 22 et 23 branchés au réacteur 4 et à des brûleurs 24 et 25, un four 26 avec une chambre de combustion cylindrique 27, un refroidisseur à vis 28 avec un moteur 29 et une chemise 30, un capteur de température 31, une fermeture rotative 32, un séparateur magnétique 33, un réservoir de stockage 34, un broyeur 35, un transporteur 36, branché à une trémie 37 avec un doseur 38 et un échangeur de chaleur 39, un robinet compteur de débit 40, un compresseur 41, un robinet 42, un brûleur 43, une chemise 44 de l'échangeur de chaleur 39, un brûleur turbulent 45, un ventilateur 46 avec un robinet 47, une chambre de réaction 48 du four 26, un réservoir à eau 49, un injecteur 50, un capteur de température 51, un réfrigérateur 52, un robinet 53, un filtre 54, un microbroyeur 55, un ventilateur 56 branché à un réservoir de stockage 57, un robinet 58, un condenseur 59, un séparateur 60, un filtre à eau 61, un robinet 62, branché à un évaporateur 63, un robinet 64, branché à un réservoir de stockage 65, un robinet 66, branché à un réservoir de stockage 67, le broyeur 35 étant également branché à un réservoir de stockage 68, un doseur en poids 69, branché à un mélangeur 70, un robinet 71 et un doseur 72, un malaxeur 73, une pompe 74, un four cylindrique 75, un capteur de consommation d'air 76, un ventilateur 77, un réfrigérateur 78, une cuve à eau 79, un filtre 80, un cyclone 81, un ventilateur 82, branché à un réservoir de stockage 83, un réservoir de stockage des cendres 84, des robinets 85 et 86, un robinet 87, branché à un four 88, un ventilateur 89, un capteur de température 90, un réfrigérateur 91, un filtre 92, un microbroyeur 93, un ventilateur 94, un réservoir de stockage 95, un robinet 96 et un robinet 97.

Conformément à l'invention, l'obtention de noir de carbone à partir de déchets de caoutchouc est réalisée comme indiqué ci-après.

Dans la trémie 1 équipée des fermetures fermées 2 et 3, on introduit les déchets de caoutchouc broyés. Après cela, on ouvre la fermeture 2 de sorte que les déchets de la trémie 1 tombent en bas et restent sur la fermeture 3. On ouvre ensuite la fermeture 3 et la portion des déchets tombe dans le réacteur cylindrique 4. Ensuite on ferme la fermeture 3. Simultanément avec le moteur 5, on met en rotation la vis 6 installée dans le réacteur cylindrique 4. Les déchets broyés sont pris par la vis et entraînés dans le réacteur cylindrique 4 vers la sortie 7 équipée de la fermeture rotative 8. Le temps de déplacement des déchets dans le réacteur cylindrique est régulé par le changement des tours de la vis 6. Simultanément à l'initiation du procédé et au déplacement des déchets, on introduit le combustible provenant de la cuve 9 par le robinet régulateur 10 dans le brûleur 11 et on le brûle. Les produits de combustion sont dirigés vers l'enveloppe 12 du réacteur 4. En passant dans l'enveloppe 12, les produits de combustion du combustible chauffent le réacteur, se refroidissent à leur tour et, à l'aide de l'aspirateur de fumées 13, sont évacués dans la cheminée 14.

Le générateur de vapeur 15 alimente en vapeur d'eau le surchauffeur de vapeur 16 par l'intermédiaire du robinet 17 de manière à la porter à une température comprise entre 600 et 700 °C. Pour cela, le combustible provenant de la cuve 9 alimente le brûleur 19 via le robinet 18 pour être brûlé. Les produits de combustion sont chauffés au contact de la vapeur d'eau portée à la température de 600-700 °C, puis ils se refroidissent jusqu'à une température comprise entre 200 et 250 °C, avant d'être évacués à l'aide de l'aspirateur à fumées 13 dans la cheminée 14.

La vapeur d'eau surchauffée provenant du surchauffeur d'eau 16 est amenée par le robinet 20 dans le réacteur cylindrique 4. La température de surchauffe de la vapeur est contrôlée selon les indications du capteur de température 21. Les déchets de caoutchouc se déplacent dans le réacteur 4 et se chauffent au contact des parois chaudes du réacteur et par voie d'échange calorifique convectif avec la vapeur d'eau fournie dans le réacteur. Il en résulte une thermolyse des déchets avec dégagement des produits gazeux et des résidus solides de carbone.

Les produits de décomposition des déchets se mélangent avec la vapeur d'eau d'où résultent les produits vapeur-gaz. Les produits vapeur-gaz sont évacués du réacteur 4 par les robinets 22 et 23 dans les brûleurs 24 et 25 du four 26 et sont brûlés dans une atmosphère réduite en air. La combustion des produits vapeur-gaz dans la chambre de combustion cylindrique 27 engendre la formation d'une torche turbulente. Une partie des produits vapeur-gaz brûle, et une autre partie se décompose avec la formation de noir de carbone.

Les résidus solides de carbone présents dans le réacteur 4 passent par la sortie 7 équipée de la fermeture rotative 8 dans l'échangeur de chaleur à vis 28 pourvu du moteur 29 où ils sont refroidis à une température supérieure à 100 °C par l'intermédiaire de l'eau qui coule dans l'enveloppe 30. La température de refroidissement des résidus solides de carbone est contrôlée selon les indications du capteur de température 31. Au cours de l'amenée des résidus broyés dans le flux des produits vapeur-gaz pour leur transport dans le brûleur, le refroidissement des résidus de carbone à une température inférieure à 100 °C permet la condensation de la vapeur d'eau sur les particules de résidu (présente dans les produits vapeur-gaz) et les hydrocarbures avec un point d'ébullition supérieur à 100 °C.

Après refroidissement, les résidus solides sont amenés via la fermeture rotative 32 dans le séparateur magnétique 33 permettant le retrait du métal des résidus de carbone, puis le métal est stocké dans le réservoir 34. La thermolyse des déchets de caoutchouc réalisée dans le réacteur à vis permet le broyage des résidus solides sous l'action de la vis et la séparation des éléments métalliques qui sont ensuite triés à l'aide du séparateur magnétique.

Les résidus de carbone ainsi purifiés des éléments métalliques par le séparateur magnétique 33 sont ensuite acheminés dans le broyeur 35 où ils sont broyés pour obtenir des particules de dimensions comprises entre 0,10 et 2,0 mm. Les résidus broyés passent ensuite dans le transporteur 36 permettant d'alimenter la trémie 37 équipée du doseur 38 et d'un échangeur de chaleur tubulaire 39.

On ouvre le robinet-compteur débit 40 et une partie des produits vapeur-gaz du réacteur 4 est amenée dans le compresseur 41, où ils passent à une température comprise entre 350 et 400 °C avant d'être injectés dans l'échangeur de chaleur tubulaire 39. Simultanément, du combustible provenant de la cuve 9 par le robinet 42 est injecté et brûlé dans le brûleur 43. Les produits de combustion sont envoyés dans la chemise 44 de l'échangeur de chaleur 39 et sont ensuite évacués avec le ventilateur 13 dans la cheminée 14.

Simultanément, les résidus de carbone broyés provenant de la trémie 37 sont amenés en quantité déterminée grâce au doseur 38 dans l'échangeur de chaleur 39 où ils sont mélangés avec les produits vapeur-gaz fournis par le compresseur 41. Les résidus de carbone broyés présentent dans l'échangeur de chaleur 39 une température maximale de 150 °C. Les produits vapeur-gaz présentent quant à eux une température proche de 400 °C dans l'échangeur de chaleur 39. Au cours du mélange de ces deux flux, la température du mélange s'abaisse et les composants du mélange présentant une température d'ébullition proche de 400 °C peuvent se condenser sur les particules du carbone. C'est pourquoi, pour éviter cette condensation, on fournit dans l'échangeur de chaleur l'énergie calorifique qui est transmise par les produits de combustion du carburant au cours de leur passage dans la chemise 44.

Le mélange des produits vapeur-gaz et des résidus solides qui se forme dans l'échangeur de chaleur 39 sous l'action du compresseur 41 passe dans le brûleur turbulent 45, où de l'air provenant du ventilateur 46 est amené par le robinet 47 dans le canal à part du brûleur. Le mélange passe sous forme d'un tourbillon par le système des ailettes en tourbillon du brûleur turbulent 45 dans la chambre de combustion 27. Simultanément, dans la chambre de combustion 27, de l'air s'échappe par un canal à part du brûleur 45, et est mélangé avec le mélange composé des particules solides de carbone et des produits vapeur-gaz, d'où résulte la formation du mélange préparé à la combustion.

Ce mélange s'enflamme et donne lieu au procédé de combustion des produits vapeur-gaz. Une torche turbulente se forme ainsi dans la chambre de combustion 27 avec la combustion incomplète des produits vapeur-gaz, fournis dans la chambre au moyen des brûleurs, installés tangentiellement et amenés avec le brûleur turbulent (mélangé avec le résidu de carbone broyé).

Pour déterminer le rapport de masse des produits vapeur-gaz et des résidus de carbone broyés amenés pour la combustion dans les limites de 1: (0,1 - 2) à l'aide du doseur 38, on fournit la quantité déterminée de résidus de carbone broyés, qui est déterminée selon la grandeur sommaire des produits vapeur-gaz amenés dans la chambre de combustion avec le brûleur turbulent et les brûleurs installés tangentiellement dans la chambre de combustion.

Au cours de l'amenée des produits vapeur-gaz du réacteur 4 dans les brûleurs 24 et 25 du four 26 à l'aide du robinet-compteur de débit 40 et du doseur 38, le débit (contrôlé selon les indications des robinets-compteur de débit 22 et 23) du mélange produits vapeur-gaz - résidu de carbone broyé est fixé de telle sorte que le rapport de masse corresponde à 1 kg de produits vapeur-gaz pour 0,1 kg à 2,0 kg de résidu de carbone.

A l'issue de la combustion incomplète du mélange produits vapeur-gaz - résidu de carbone broyé, il se forme du noir de carbone et des gaz. Le flux de noir de carbone et des gaz de la combustion incomplète est entraîné de la chambre de combustion 27 dans la chambre de réaction 48, où les particules de carbone subissent un traitement thermique. Dans la chambre de réaction 48 de la cuve 49, on pulvérise de l'eau par l'injecteur 50 ce qui entraîne le refroidissement du flux de noir de carbone et des produits de la combustion à une température comprise entre 700 et 800 °C, ce qui est contrôlé selon les indications du capteur de la température 51. Le flux de noir de carbone et de produits de combustion est acheminé de la chambre de réaction 48 dans le réfrigérateur 52, où de l'eau provenant de la cuve 49 par le robinet 53 est pulvérisée afin de refroidir le flux de noir de carbone et de produits de combustion. Le flux de noir de carbone et de produits de combustion est ensuite acheminé du réfrigérateur 52 dans le filtre 54, où l'on sépare le noir de carbone qui est envoyé dans le microbroyeur 55 et on la broie avant de l'envoyer par transport pneumatique à l'aide du ventilateur 56 dans le réservoir de stockage 57.

Les produits de la combustion incomplète contenant des matières combustibles après la séparation du noir de carbone dans le filtre 54, ces produits sont dirigés via le robinet 58 dans le brûleur 11 où ils sont brûlés ensemble avec le combustible amené dans le brûleur à partir du réservoir 9, ce qui prévient le rejet de substances nocives dans l'environnement et permet de réduire la consommation du combustible provenant du réservoir 9 dans le brûleur 11, d'où résulte une réduction de consommation énergétique du procédé de production de noir de carbone des déchets de caoutchouc selon l'invention.

De manière alternative, les produits vapeur-gaz évacués du réacteur 4 par le robinet 85 sont dirigés vers le condenseur 59, où à l'issue de l'échange de chaleur avec l'eau de refroidissement, les produits vapeur-gaz sont condensés en un condensat contenant de l'eau et de l'huile. Le condensat est ensuite acheminé vers le séparateur 60 où l'eau est séparée de l'huile. L'eau passe par le filtre 61 et est réacheminée vers le générateur de vapeur 15 pour produire de la vapeur d'eau. L'huile provenant du séparateur 60 est transférée vers l'évaporateur 63 via le robinet 62, où elle est séparée en première fraction avec une température d'ébullition inférieure ou égale à 360 °C et en deuxième fraction avec une température d'ébullition supérieure à 360 °C. La première fraction provenant de l'évaporateur 63 transite par le robinet 64 et coule dans le réservoir de stockage 65 tant dis que la deuxième fraction transite par le robinet 66 et coule dans le réservoir de stockage 67.

Les résidus solides de carbone présents dans le réacteur 4 passent par la sortie 7 équipée de la fermeture rotative 8 dans le refroidisseur à vis 28 équipé du moteur 29 où ils sont refroidis à température ambiante par voie d'échange thermique avec l'eau qui coule dans l'enveloppe 30 du refroidisseur. La température de refroidissement des résidus solides de carbone est contrôlée selon les indications du capteur de température 31. Les résidus solides de carbone provenant du refroidisseur 28 transitent par la fermeture rotative 32 jusqu'au séparateur magnétique 33, à l'intérieur duquel le métal des résidus de carbone est retiré avant d'être stockés dans le réservoir de stockage 34. Les résidus de carbone ainsi purifiés des éléments métalliques sont envoyés dans le broyeur 35 où ils sont broyés avant d'être chargés dans le réservoir de stockage 68.

Les résidus de carbone broyés provenant du réservoir de stockage 68 transitent par le doseur à poids 69 pour être acheminés en quantités déterminées dans le mélangeur 70. Simultanément, la première fraction provenant du réservoir de stockage 65 par le robinet 71 est acheminée en quantité déterminée de poids grâce au doseur 72 jusqu'au mélangeur 70. Une fois le mélangeur rempli en résidus de carbone et en première fraction, le tout est mélangé grâce au malaxeur 73. Le mélange est ensuite transférés à l'aide de la pompe 74 dans le four cylindrique 75 où il est brûlé avec un coefficient d'excès d'air compris entre 0,20 et 0,35.

La quantité d'air fournie dans le four 75 est contrôlée selon les indications du capteur de débit d'air 76 par la régulation du débit d'air grâce au ventilateur 77. Le flux de produits de combustion et de noir de carbone du four 75 est envoyé dans le réfrigérateur 78 recevant de l'eau pulvérisée en provenance de la cuve 79, permettant de réduire la température des produits de combustion et de noir de carbone. Le mélange refroidi du réfrigérateur 78 transite par le filtre 80 et subi une séparation mécanique dans un champ centrifuge par un flux de gaz circulant dans le cyclone 81, permettant de dégager le noir de carbone et la cendre. Le noir de carbone est transféré par transport pneumatique à l'aide du ventilateur 82 dans le réservoir de stockage 83, et la cendre est déchargée du cyclone 81 dans le réservoir de stockage 84.

Les gaz du noir de carbone purifiés par le filtre 80 contiennent des composants combustibles, et sont brûlés via le robinet 58 dans le brûleur 11.

La deuxième fraction provenant du réservoir de stockage 67 transite par le robinet 87 jusqu'au four cylindrique 88, où simultanément à l'aide du ventilateur 89, de l'air est introduit. La deuxième fraction est soumise à une décomposition thermique en noir de carbone et en gaz à des températures comprises entre 850 et 2100 °C par voie de combustion incomplète (en condition de manque d'air) dans le four cylindrique 88. La température de la combustion est contrôlée selon les indications du capteur de température 90.

La chaleur dégagée lors de la combustion d'une partie de la deuxième fraction provoque la décomposition thermique de la fraction liquide avec formation de produits de combustion et de noir de carbone. Le flux des produits de combustion et de noir de carbone provenant du four 88 est évacué dans le réfrigérateur 91, où de l'eau provenant de la cuve 79 est pulvérisée, abaissant la température des produits de combustion et du noir de carbone. Le mélange refroidi du réfrigérateur 91 est amené dans le filtre 92, où le noir de carbone est dégagé du flux gazeux et est amené dans le microbroyeur 93. Le noir de carbone est ensuite transférée par transport pneumatique à l'aide du ventilateur 94 dans le réservoir de stockage 95.

Les gaz du noir de carbone purifiés par le filtre 92 contiennent des composants combustibles, et sont brûlés via les robinets 96 et 58 dans le brûleur 11.

Les produits vapeur-gaz, constitués par le mélange de la vapeur d'eau et des gaz non condensés de la décomposition thermique des déchets de caoutchouc, provenant du condenseur 59 par les robinets 97 et 58 sont brûlés dans le brûleur 11.

La combustion de ce mélange permet de diminuer la formation des oxydes d'azote nocifs grâce à la présence de la vapeur d'eau dans le mélange.

L'invention est illustrée par les exemples suivants.

Exemple 1

Dans la trémie 1 équipée des fermetures fermées 2 et 3, on introduit les déchets de caoutchouc broyés en particules de dimensions comprises entre 50 et 70 mm en quantité de 150 kg. Après cela, on ouvre la fermeture 2, les déchets de la trémie 1 tombent en bas et restent sur la fermeture 3. On ferme la fermeture 2 puis on ouvre la fermeture 3 et la portion de déchets sous l'action de son propre poids commence à entrer dans le réacteur cylindrique 4. Ensuite on ferme la fermeture 3. Simultanément avec le moteur 5, on met en rotation la vis 6 installée dans le réacteur cylindrique 4. Les déchets broyés sont pris par la vis et entraînés dans le réacteur cylindrique 4 vers la sortie 7 équipée de la fermeture rotative 8. Le temps de déplacement des déchets dans le réacteur cylindrique est régulé par le changement de vitesse des tours de vis 6. Ce temps est déterminé préalablement en fonction des dimensions des particules des déchets et de l'intensité de l'échange de chaleur dans le réacteur. Admettons que dans notre cas, le temps de séjour des déchets dans le réacteur jusqu'à leur décomposition complète (sortie des volatiles) représente 20 minutes. On fixe le nombre de tours de vis 6 égal à 3 tours/min. Donc au cours de 20 minutes, la vis fera 60 tours et les déchets qui sont amenés à l'entrée du réacteur se présenteront sous la forme de résidus solides de carbone à la sortie 7 du réacteur 4.

Simultanément à l'initiation du procédé et au déplacement des déchets, on introduit le combustible provenant du réservoir 9 par le robinet-régulateur 10 dans le brûleur 11 selon un débit de 40 kg/h et on le brûle. Les produits de combustion sont envoyés dans la chemise 12 du réacteur 4. En passant par l'enveloppe 12, les produits de combustion du combustible chauffent le réacteur et à leur tour se refroidissent et à l'aide de l'aspirateur de fumées 13 sont évacués dans la cheminée 14.

Le générateur de vapeur 15 alimente en vapeur d'eau le surchauffeur de vapeur 16 par l'intermédiaire du robinet 17 selon un débit de 243 kg /h de manière à la porter à une température de 700 °C. Pour cela, le combustible provenant de la cuve 9 alimente par le robinet 18 le brûleur 19 avec un débit de 9 kg/h et on le brûle. Les produits de combustion sont amenés dans le surchauffeur de vapeur 16. Au contact de la vapeur d'eau provenant du surchauffeur de vapeur, les produits de combustion chauffent jusqu'à une température de 600 °C, et ils se refroidissent jusqu'à une température comprise entre 200 et 250 °C, avant d'être évacués à l'aide de l'aspirateur à fumées 13 dans la cheminée 14.

La vapeur d'eau surchauffée provenant du surchauffeur de vapeur 16 par l'intermédiaire du robinet 20 est fournie dans le réacteur cylindrique 4 selon un débit de 243 kg/h. La température de surchauffe est contrôlée selon les indications du capteur de température 21. La vapeur surchauffée fournit ainsi directement dans le réacteur 4 la chaleur nécessaire pour le chauffage et la décomposition thermique des déchets. Les déchets de caoutchouc se déplacent dans le réacteur 4 et se réchauffent au contact des parois chaudes du réacteur et par voie d'échange thermique convectif avec la vapeur d'eau fournie dans le réacteur. Il en résulte une thermolyse des déchets avec dégagement des produits gazeux et des résidus solides de carbone.

Dans notre cas, au cours de la décomposition thermique des déchets de caoutchouc, il y a formation de 45 % mass. de gaz de décomposition et 55 % mass. de résidus solides de carbone, contenant 8 % mass. d'éléments métalliques (fil de métal). Donc, au cours de la décomposition thermique de 150kg de déchets durant 20 minutes, la productivité du réacteur sera de 450 kg/h, avec 203 kg/h de gaz de décomposition qui se forment et 247 kg/h de résidus solides de carbone, contenant 20 kg de métal et 227 kg de matière carbonifère.

Les gaz de décomposition sont mélangés avec la vapeur d'eau et forment les produits vapeur-gaz en quantité de 203 kg/h + 243 kg/h = 446 kg/h. La chaleur de combustion spécifique d'un tel mélange représente 18 000 kJ/kg. Ce mélange peut être brûlé sans combustible supplémentaire.

Les produits vapeur-gaz formés selon un débit de 446 kg/h sont évacués du réacteur 4 par les robinets 22 et 23 dans les brûleurs 24 et 25 du four 26 et sont brûlés dans une atmosphère réduite en air, c'est à dire avec une quantité d'air de 0,6 par rapport à la quantité théoriquement nécessaire pour la combustion complète de ce mélange. Admettons dans notre cas que la quantité d'air théoriquement nécessaire représente 10 kg sur 1 kg de produits vapeur-gaz brûlés. Donc, il faut fournir dans le four de l'air en quantité de 2676 kg/h, ce qui est réalisé au moyen des ventilateurs et des compteurs de débit installés sur les brûleurs 24 et 25. A l'issue de la combustion des produits vapeur-gaz dans la chambre cylindrique 27, il se forme une torche turbulente. Une partie des produits vapeur-gaz brûle, et une autre partie se décompose thermiquement avec la formation de noir de carbone.

Les résidus solides de carbone présents dans le réacteur 4 passent par la sortie 7 équipée de la fermeture rotative 8 dans l'échangeur de chaleur à vis 28 pourvu du moteur 29 avec un débit de 247 kg/h, et sont refroidis jusqu'à une température de 120 °C par voie d'échange calorifique par l'intermédiaire de l'eau qui passe dans l'enveloppe 30 du refroidisseur. La température de refroidissement des résidus solides de carbone est contrôlée selon les indications du capteur de température 31.

Au cours de l'amenée des résidus broyés dans le flux des produits vapeur-gaz pour leur transport dans le brûleur, le refroidissement des résidus de carbone à une température inférieure à 100 °C permet la condensation de la vapeur d'eau sur les particules de résidus (présente dans les produits vapeur-gaz) et les hydrocarbures présentant un point d'ébullition supérieur à 100 °C.

Après refroidissement, les résidus solides sont amenés par la fermeture rotative 32 dans le séparateur magnétique 33, permettant le retrait du métal des résidus de carbone selon un débit de 20 kg/h, puis le métal est stocké dans le réservoir 34. La thermolyse des déchets de caoutchouc réalisée dans le réacteur à vis permet le broyage des résidus solides sous l'action de la vis et la séparation des éléments métalliques qui sont ensuite triés à l'aide du séparateur magnétique.

Les résidus de carbone ainsi purifiés des éléments métalliques selon un débit de 227 kg/h au niveau du séparateur magnétique 33 sont ensuite acheminés dans le broyeur 35 où ils sont broyés pour obtenir des particules de 0,25 mm de dimensions. Les résidus broyés passent ensuite dans le transporteur 36 permettant d'alimenter la trémie 37 équipée du doseur 38 et d'un échangeur de chaleur tubulaire 39.

On ouvre le robinet-compteur de débit 40 et une partie des produits vapeur-gaz du réacteur 4 est amenée dans le compresseur 41 selon un débit de 200 kg/h.

Simultanément, à l'aide des robinets 22 et 23, on réduit l'amenée des produits vapeur-gaz dans les brûleurs 24 et 25 jusqu'à un débit de 246 kg/h. A l'aide du système de régulation de l'alimentation en air dans les brûleurs, on réduit l'admission d'air jusqu'à un débit de 1476 kg/h pour garder une quantité d'air égale à 0,6 par rapport à la quantité théoriquement nécessaire. Les produits vapeur-gaz sont amenés dans l'échangeur de chaleur tubulaire 39 par l'intermédiaire du compresseur 41 selon un débit de 200 kg/h et avec une température de 350 °C.

Simultanément, du combustible provenant de la cuve 9 par le robinet 42 est injecté et brûlé avec un débit de 2 kg/h dans le brûleur 43. Les produits de combustion sont envoyés dans la chemise 44 de l'échangeur de chaleur 39 et sont ensuite évacués avec un débit de 24 kg/h par le ventilateur 13 dans la cheminée 14.

Simultanément, les résidus de carbone broyés provenant de la trémie 37 sont amenés via le doseur 38 avec un débit de 44,6 kg/h dans l'échangeur de chaleur 39 où ils sont mélangés avec les produits vapeur-gaz fournis par le compresseur 41. Les produits vapeur-gaz et les résidus solides se mélangent ainsi. Les résidus de carbone broyés provenant de la trémie 37 présentent une température maximale de 120 °C dans l'échangeur de chaleur 39. Les produits vapeur-gaz, présentent quant à eux une température proche de 350 °C dans l'échangeur de chaleur 39. Au cours du mélange de ces deux flux, la température du mélange s'abaisse et les composants du mélange présentant une température d'ébullition inférieure à 350 °C peuvent se condenser sur les particules du carbone. C'est pourquoi, pour éviter cette condensation, on fournit dans l'échangeur de chaleur l'énergie calorifique qui est transmise par les produits de combustion du carburant au cours de leur passage dans la chemise 44.

Les produits vapeur-gaz sont acheminés dans le four 26 selon un débit de 446 kg/h. Donc pour obtenir une corrélation de masse des produits vapeur-gaz et du résidu de carbone broyé selon l'invention, soit 1:0,1, il faut alimenter le four en résidus de carbone selon un débit de 44,6 kg, ce qui est obtenu grâce à la régulation de la valeur d'amenée à l'aide du doseur 38.

Le mélange des produits vapeur-gaz et des particules de résidus solides qui se forme dans l'échangeur de chaleur 39 sous l'action du compresseur 41 selon un débit de 244,6 kg/h passe dans le brûleur turbulent 45, où de l'air provenant du ventilateur 46 est amené par le robinet 47 dans le canal à part du brûleur.

Pour fixer la valeur de l'alimentation en air à 0,6 par rapport à la quantité d'air théoriquement nécessaire, on amène l'air selon un débit de (200 kg/h. 10 kg/kg). 0,6 = 1200 kg/h à l'aide du ventilateur 46 et du robinet 47 dans un canal à part du brûleur 45.

Le mélange des produits vapeur-gaz et des résidus de carbone broyés passe avec un débit de 244,6 kg/ h par le système des ailettes en tourbillon du brûleur turbulent 45 dans la chambre de combustion 27. Simultanément, dans la chambre de combustion 27, l'air passe par un canal à part du brûleur 45 avec un débit de 1200 kg/h, et est mélangé avec le mélange composé des particules solides de carbone et des produits vapeur-gaz, d'où résulte la formation du mélange préparé à la combustion.

Ce mélange s'enflamme et donne lieu au procédé de combustion des produits vapeur-gaz. Une torche turbulente se forme ainsi dans la chambre de combustion 27 avec la combustion incomplète des produits vapeur-gaz, fournis dans la chambre au moyen des brûleurs, installés tangentiellement et amenés avec le brûleur turbulent (mélangé avec le résidu de carbone broyé).

La combustion incomplète du mélange produits vapeur-gaz - résidus de carbone broyés, aboutit ainsi à la formation de noir de carbone et de gaz.

Dans notre cas, le noir de carbone se forme à l'issue de la combustion incomplète des produits vapeur-gaz (en quantité de 140 kg/h), mais aussi à l'issue du traitement thermique des résidus solides de carbone broyés (en quantité de 40 kg/h, et 4.6 kg de résidus de carbone brûlés dans le four 26). Donc, le noir de carbone se forme en quantité de 140 kg/h + 40 kg/h = 180 kg/h avec un débit de 450 kg/h de déchets de caoutchouc.

Le flux de noir de carbone, avec un débit de 180 kg/h, et des gaz de la combustion incomplète, avec un débit de 3026,6 kg/h, sont entraînés de la chambre de combustion 27 dans la chambre de réaction 48, où le procédé de traitement thermique des particules de carbone a lieu. Dans la chambre de réaction 48 de la cuve 49, on pulvérise de l'eau par l'injecteur 50, ce qui entraîne le refroidissement du flux de noir de carbone et des produits de la combustion à une température de 700 °C, ce qui est contrôlé selon les indications du capteur de la température 51. Le flux de noir de carbone et de produits de combustion est acheminé de la chambre de réaction 48 dans le réfrigérateur 52, où de l'eau provenant de la cuve 49 par le robinet 53 est pulvérisée afin de refroidir le flux de noir de carbone et des produits de combustion jusqu'à une température de 110 °C. Le refroidissement jusqu'à une température de 110 °C est nécessaire pour prévenir la condensation de la vapeur d'eau qui est incluse dans la composition des gaz de combustion incomplète. La formation du condensat (lors de la condensation de la vapeur d'eau) dans le réfrigérateur 52 mène au dépôt sur les parois du réfrigérateur du mélange eau- noir de carbone, c'est à dire à la perte du produit de valeur (noir de carbone) et à la perturbation du réfrigérateur 52. Le flux de noir de carbone et de produits de combustion est ensuite amené du réfrigérateur 52 dans le filtre 54, où l'on sépare le noir de carbone qui est envoyé dans le microbroyeur 55 et on la broie avant de l'envoyer par transport pneumatique à l'aide du ventilateur 56 selon un débit de 180 kg/h dans le réservoir de stockage 57.

Les produits de la combustion incomplète contenant des matières combustibles après la séparation du noir de carbone dans le filtre 54, ces produits sont dirigés via le robinet 58 avec un débit de 3026,6 kg /h dans le brûleur 11 où ils sont brûlés ensemble avec le combustible amené dans le brûleur à partir du réservoir 9, ce qui prévient le rejet de substances nocives dans l'environnement et permet de réduire la consommation du combustible provenant du réservoir 9 dans le brûleur 11, d'où résulte une réduction de consommation énergétique du procédé de production de noir de carbone des déchets de caoutchouc selon l'invention.

La chaleur spécifique de combustion des produits de combuston incomplète est dans notre cas de 500 kJ/kg et la combustion de 3026,6 kg/h de ces produits est équivalente à la combustion de 37 kg/h de carburant liquide, c'est pourquoi on réduit l'alimentation en carburant du réservoir 9 par le robinet- régulateur 10 dans le brûleur 11 de 40 kg/h à 3 kg/h.

Exemple 2

Dans la trémie 1 équipée des fermetures fermées 2 et 3 on introduit les déchets de caoutchouc broyés en particules de dimensions comprises entre 50 et 70 mm en quantité de 200 kg. Après cela, on ouvre la fermeture 2, les déchets de la trémie 1 tombent en bas et restent sur la fermeture 3. On ferme la fermeture 2, puis on ouvre la fermeture 3 et la portion de déchets sous l'action de son propre poids commence à entrer dans le réacteur cylindrique 4. Ensuite on ferme la fermeture 3. Simultanément avec le moteur 5, on met en rotation la vis 6 installée dans le réacteur cylindrique 4. Les déchets broyés sont pris par la vis et entraînés dans le réacteur cylindrique 4 vers la sortie 7 équipée de la fermeture rotative 8. Le temps de déplacement des déchets dans le réacteur cylindrique est régulé par le changement de vitesse des tours de vis 6. Ce temps est déterminé préalablement en fonction des dimensions des particules de déchets et de l'intensité de l'échange de chaleur dans le réacteur. Admettons que dans notre cas, le temps de séjour des déchets dans le réacteur jusqu'à leur décomposition complète (sortie des volatiles) représente 20 minutes. On fixe le nombre de tours de vis 6 égal à 4 tours/min. Donc au cours de 20 minutes la vis fera 80 tours et les déchets qui sont amenés à l'entrée du réacteur se présenteront sous la forme de résidus solides de carbone à la sortie 7 du réacteur 4.

Simultanément à l'initiation du procédé et au déplacement des déchets, on introduit le combustible provenant du réservoir 9 par le robinet-régulateur 10 dans le brûleur 11 selon un débit de 65 kg/h et on le brûle. Les produits de combustion sont envoyés dans la chemise 12 du réacteur 4. En passant par l'enveloppe 12, les produits de combustion du combustible chauffent le réacteur et à leur tour se refroidissent et à l'aide de l'aspirateur de fumées 13 sont évacués dans la cheminée 14.

Le générateur de vapeur 15 alimente en vapeur d'eau le surchauffeur de vapeur 16 par l'intermédiaire du robinet 17 selon un débit de 65 kg/h de manière à la porter à une température de 600 °C. Pour cela, le combustible provenant de la cuve 9 alimente par le robinet 18 le brûleur 19 avec un débit de 8 kg/h et on le brûle. Les produits de combustion sont amenés dans le surchauffeur de vapeur 16. Au contact de la vapeur d'eau provenant du surchauffeur de vapeur, les produits de combustion chauffent jusqu'à une température de 600 °C, et ils se refroidissent jusqu'à une température comprise entre 200 et 250 °C, avant d'être évacués à l'aide de l'aspirateur à fumées 13 dans la cheminée 14.

La vapeur d'eau surchauffée provenant du surchauffeur de vapeur 16 par l'intermédiaire du robinet 20 est fournie dans le réacteur cylindrique 4 selon un débit de 65 kg/h. La température de surchauffe est contrôlée selon les indications du capteur de température 21. La vapeur surchauffée fournit ainsi directement dans le réacteur 4 la chaleur nécessaire pour le chauffage et la décomposition thermique des déchets. Les déchets de caoutchouc se déplacent dans le réacteur 4 et se réchauffent au contact des parois chaudes du réacteur et par voie d'échange thermique convectif avec la vapeur d'eau fournie dans le réacteur. Il en résulte une thermolyse des déchets avec dégagement des produits gazeux et des résidus solides de carbone.

Dans notre cas, au cours de la décomposition thermique des déchets de caoutchouc, il y a formation de 25 % mass. de gaz de décomposition et 75 % mass. de résidus solides de carbone. Donc, au cours de la décomposition thermique de 200 kg de déchets durant 20 minutes, la productivité du réacteur sera de 600 kg/h, avec 150 kg/h de gaz de décomposition qui se forment et 450 kg/h de résidus solides de carbone, contenant 20 kg de métal et 430 kg de matière carbonifère.

Les gaz de décomposition sont mélangés avec la vapeur d'eau et forment les produits vapeur-gaz en quantité de 150 kg/h + 65 kg/h = 215 kg/h. La chaleur de combustion spécifique d'un tel mélange représente 21 000 kJ/kg. Ce mélange peut être brûlé sans combustible supplémentaire.

Les produits vapeur-gaz formés selon un débit de 215 kg/h sont évacués du réacteur 4 par les robinets 22 et 23 dans les brûleurs 24 et 25 du four 26 et sont brûlés dans une atmosphère réduite en air, c'est à dire avec une quantité d'air de 0,7 par rapport à la quantité théoriquement nécessaire pour la combustion complète de ce mélange. Admettons dans notre cas que la quantité d'air théoriquement nécessaire représente 11 kg sur 1 kg de produits vapeur-gaz brûlés. Donc, il faut fournir dans le four de l'air en quantité de 1656 kg/h, ce qui est réalisé au moyen des ventilateurs et des compteurs de débit installés sur les brûleurs 24 et 25. A l'issue de la combustion des produits vapeur-gaz dans la chambre cylindrique 27, il se forme une torche turbulente. Une partie des produits vapeur-gaz brûle, et une autre partie se décompose thermiquement avec la formation de noir de carbone.

Les résidus solides de carbone présents dans le réacteur 4 passent par la sortie 7 équipée de la fermeture rotative 8 dans l'échangeur de chaleur à vis 28 pourvu du moteur 29 avec un débit de 450 kg/h, et sont refroidis jusqu'à une température de 120 °C par voie d'échange calorifique par l'intermédiaire de l'eau qui passe dans l'enveloppe 30 du refroidisseur. La température de refroidissement des résidus solides de carbone est contrôlée selon les indications du capteur de température 31.

Au cours de l'amenée des résidus broyés dans le flux des produits vapeur-gaz pour leur transport dans le brûleur, le refroidissement des résidus de carbone à une température inférieure à 100 °C permet la condensation de la vapeur d'eau sur les particules de résidus (présente dans les produits vapeur-gaz) et les hydrocarbures présentant un point d'ébullition supérieur à 100 °C.

Après refroidissement, les résidus solides sont amenés par la fermeture rotative 32 dans le séparateur magnétique 33, permettant le retrait du métal des résidus de carbone selon un débit de 20 kg/h, puis le métal est stocké dans le réservoir 34. La thermolyse des déchets de caoutchouc réalisée dans le réacteur à vis permet le broyage des résidus solides sous l'action de la vis et la séparation des éléments métalliques qui sont ensuite triés à l'aide du séparateur magnétique.

Les résidus de carbone ainsi purifiés des éléments métalliques selon un débit de 430 kg/h au niveau du séparateur magnétique 33 sont ensuite acheminés dans le broyeur 35 où ils sont broyés pour obtenir des particules de 2,0 mm de dimensions. Les résidus broyés passent ensuite dans le transporteur 36 permettant d'alimenter la trémie 37 équipée du doseur 38 et d'un échangeur de chaleur tubulaire 39.

On ouvre le robinet-compteur de débit 40 et une partie des produits vapeur-gaz du réacteur 4 est amenée dans le compresseur 41 selon un débit de 200 kg/h.

Simultanément, à l'aide des robinets 22 et 23, on réduit l'amenée des produits vapeur-gaz dans les brûleurs 24 et 25 jusqu'à un débit de 15 kg/h. A l'aide du système de régulation de l'alimentation en air dans les brûleurs, on réduit l'admission d'air jusqu'à un débit de 116 kg/h pour garder une quantité d'air égale à 0,7 par rapport à la quantité théoriquement nécessaire. Les produits vapeur-gaz sont amenés dans l'échangeur de chaleur tubulaire 39 par l'intermédiaire du compresseur 41 selon un débit de 200 kg/h et avec une température de 400 °C.

Simultanément, du combustible provenant de la cuve 9 par le robinet 42 est injecté et brûlé avec un débit de 2 kg/h dans le brûleur 43. Les produits de combustion sont envoyés dans la chemise 44 de l'échangeur de chaleur 39 et sont ensuite évacués avec un débit de 240 kg/h par le ventilateur 13 dans la cheminée 14.

Simultanément, les résidus de carbone broyés provenant de la trémie 37 sont amenés via le doseur 38 avec un débit de 430 kg/h dans l'échangeur de chaleur 39 où ils sont mélangés avec les produits vapeur-gaz fournis par le compresseur 41. Les produits vapeur-gaz et les résidus solides se mélangent ainsi. Les résidus de carbone broyés provenant de la trémie 37 présentent une température maximale de 120 °C dans l'échangeur de chaleur 39. Les produits vapeur-gaz, présentent quant à eux une température proche de 400 °C dans l'échangeur de chaleur 39. Au cours du mélange de ces deux flux, la température du mélange s'abaisse et les composants du mélange présentant une température d'ébullition inférieure à 400 °C peuvent se condenser sur les particules du carbone. C'est pourquoi, pour éviter cette condensation, on fournit dans l'échangeur de chaleur l'énergie calorifique qui est transmise par les produits de combustion du carburant au cours de leur passage dans la chemise 44.

Les produits vapeur-gaz sont acheminés dans le four 26 selon un débit de 215 kg/h. Donc pour obtenir une corrélation de masse des produits vapeur-gaz et du résidu de carbone broyé selon l'invention, soit 1:2,0, il faut alimenter le four en résidus de carbone selon un débit de 430 kg, ce qui est obtenu grâce à la régulation de la valeur d'amenée à l'aide du doseur 38.

Le mélange des produits vapeur-gaz et des particules de résidus solides qui se forme dans l'échangeur de chaleur 39 sous l'action du compresseur 41 selon un débit de 630 kg/h passe dans le brûleur turbulent 45, où de l'air provenant du ventilateur 46 est amené par le robinet 47 dans le canal à part du brûleur.

Pour fixer la valeur de l'alimentation en air à 0,7 par rapport à la quantité d'air théoriquement nécessaire, on amène l'air selon un débit de (200 kg/h . 11 kg/kg). 0,7 = 1540 kg/h à l'aide du ventilateur 46 et du robinet 47 dans un canal à part du brûleur 45.

Le mélange des produits vapeur-gaz et des résidus de carbone broyés passe avec un débit de 630 kg/ h par le système des ailettes en tourbillon du brûleur turbulent 45 dans la chambre de combustion 27. Simultanément, dans la chambre de combustion 27, l'air passe par un canal à part du brûleur 45 avec un débit de 1540 kg/h, et est mélangé avec le mélange composé des particules solides de carbone et des produits vapeur-gaz, d'où résulte la formation du mélange préparé à la combustion.

Ce mélange s'enflamme et donne lieu au procédé de combustion des produits vapeur-gaz. Une torche turbulente se forme ainsi dans la chambre de combustion 27 avec la combustion incomplète des produits vapeur-gaz, fournis dans la chambre au moyen des brûleurs, installés tangentiellement et amenés avec le brûleur turbulent (mélangé avec le résidu de carbone broyé).

La combustion incomplète du mélange produits vapeur-gaz - résidus de carbone broyés, aboutit ainsi à la formation de noir de carbone et de gaz.

Dans notre cas, le noir de carbone se forme à l'issue de la combustion incomplète des produits vapeur-gaz en quantité de 65 kg/h, mais aussi à l'issue du traitement thermique des résidus solides de carbone broyés en quantité de 390 kg/h (40 kg/h de résidus de carbone brûlés dans le four 26). Donc, le noir de carbone se forme en quantité de 65 kg/h + 390 kg/h = 455 kg/h avec un débit de 600 kg/h de déchets de caoutchouc.

Le flux de noir de carbone, avec un débit de 455 kg/h, et des gaz de la combustion incomplète, avec un débit de 1911 kg/h, sont entraînés de la chambre de combustion 27 dans la chambre de réaction 48, où le procédé de traitement thermique des particules de carbone a lieu. Dans la chambre de réaction 48 de la cuve 49, on pulvérise de l'eau par l'injecteur 50, ce qui entraîne le refroidissement du flux de noir de carbone et des produits de la combustion à une température de 700 °C, ce qui est contrôlé selon les indications du capteur de la température 51. Le flux de noir de carbone et de produits de combustion est acheminé de la chambre de réaction 48 dans le réfrigérateur 52, où de l'eau provenant de la cuve 49 par le robinet 53 est pulvérisée afin de refroidir le flux de noir de carbone et des produits de combustion jusqu'à une température de 110 °C. Le refroidissement jusqu'à une température de 110 °C est nécessaire pour prévenir la condensation de la vapeur d'eau qui est incluse dans la composition des gaz de combustion incomplète. La formation du condensat (lors de la condensation de la vapeur d'eau) dans le réfrigérateur 52 mène au dépôt sur les parois du réfrigérateur du mélange eau- noir de carbone, c'est à dire à la perte du produit de valeur (noir de carbone) et à la perturbation du réfrigérateur 52. Le flux de noir de carbone et de produits de combustion est ensuite amené du réfrigérateur 52 dans le filtre 54, où l'on sépare le noir de carbone qui est envoyée dans le microbroyeur 55 et on la broie avant de l'envoyer par transport pneumatique à l'aide du ventilateur 56 selon un débit de 180 kg/h dans le réservoir de stockage 57.

Les produits de la combustion incomplète contenant des matières combustibles après la séparation du noir de carbone dans le filtre 54, ces produits sont dirigés via le robinet 58 avec un débit de 1911 kg /h dans le brûleur 11 où ils sont brûlés ensemble avec le combustible amené dans le brûleur à partir du réservoir 9, ce qui prévient le rejet de substances nocives dans l'environnement et permet de réduire la consommation du combustible provenant du réservoir 9 dans le brûleur 11, d'où résulte une réduction de consommation énergétique du procédé de production de noir de carbone des déchets de caoutchouc selon l'invention.

La chaleur spécifique de combustion des produits de combuston incomplète est dans notre cas de 1000 kJ/kg et la combustion de 1911 kg/h de ces produits est équivalente à la combustion de 48 kg/h de carburant liquide, c'est pourquoi on réduit l'alimentation en carburant du réservoir 9 par le robinet- régulateur 10 dans le brûleur 11 de 65 kg/h à 17 kg/h.

Le mélange soumis à la combustion commune contient les produits de la combustion incomplète du mélange (les produits vapeur-gaz et les résidus de carbone broyés), les gaz de décomposition thermique des déchets de caoutchouc et la vapeur d'eau. Lors de la combustion d'un tel mélange, les rejets d'oxydes d'azote sont réduits du fait de la présence de vapeur d'eau, ce qui entraîne la réduction des rejets dans l'environnement au cours du procédé d'obtention de noir de carbone à partir de déchets de caoutchouc selon l'invention.

Exemple 3

Dans la trémie 1 équipée des fermetures fermées 2 et 3, on introduit les déchets de caoutchouc broyés en particules de dimensions comprises entre 50 et 70 mm en quantité de 300 kg. Après le remplissage de la trémie 1, on ouvre la fermeture 2, les déchets de la trémie 1 tombent en bas et restent sur la fermeture 3. Après cela, on ferme la fermeture 2, puis on ouvre la fermeture 1 et les déchets tombent dans le réacteur cylindrique 4. Ensuite on ferme la fermeture 3, et on amène dans la trémie 1 une nouvelle portion de déchets en quantité de 300 kg. Le chargement des déchets dans la trémie 1 en quantité de 300 kg est réalisé périodiquement selon une fréquence 3 fois par heure. Cette méthode d'introduction des déchets dans le réacteur permet, en comparaison avec une méthode en continue, de diminuer la quantité d'air qui passe dans le réacteur avec les déchets. L'entrée de grande quantité d'air dans le réacteur engendre un risque d'explosion.

Simultanément, à l'aide du moteur 5, on met en rotation la vis 6 installée dans le réacteur cylindrique 4. Les déchets broyés sont pris par la vis et entraînés dans le réacteur cylindrique 4 vers la sortie 7 équipée de la fermeture rotative 8. Le temps de déplacement des déchets dans le réacteur cylindrique est régulé par le changement de vitesse des tours de la vis 6 de telle sorte que les déchets parcourent la vise au bout de 20 minutes (temps nécessaire pour la décomposition thermique complète des déchets) et arrivent à la sortie 7 équipée de la fermeture rotative 8. Dans cet exemple, la vitesse de rotation de la vis représente 120 tours par heure (2,0 tr/min).

Simultanément à l'initiation du procédé et au déplacement des déchets, on introduit le combustible provenant du réservoir 9 par le robinet régulateur 10 dans le brûleur 11 selon un débit de 80 kg/h et on le brûle. Les produits de combustion sont envoyés dans l'enveloppe 12 du réacteur 4 à une température de 1000 °C et en quantité de 960 kg/h (la combustion de 1 kg de combustible entraîne la formation de 12 kg de produits de combustion). En passant par l'enveloppe 12, les produits de combustion du combustible chauffent le réacteur et à leur tour se refroidissent jusqu'à 200 °C et à l'aide de l'aspirateur de fumées 13 sont évacués dans la cheminée 14.

La quantité de chaleur transmise par la paroi du réacteur de la part des produits de combustion vers les déchets au cours des 20 minutes répond à la formule suivante :

$$Q \text{ pr. comb.} = M \text{ pr. comb. } C \text{ pr. comb. } (T_2 - T_1) =$$

$$320 \text{ kg} . 1{,}34 \text{ kJ/kg }^0C \ (1000 \ ^0C - 200 \ ^0C) = 343040 \text{ kJ,}$$

où M pr. comb. représente la quantité des produits de combustion, soit 320 kg ; C pr. comb. représente la capacité thermique spécifique des produits de combustion, soit 1,34 kJ/kg °C ; T1=1000°C et T2 =200°C représentant la température d'entrée des produits de combustion dans l'enveloppe du réacteur et la température de leur sortie de l'enveloppe.

La quantité nécessaire de chaleur pour la décomposition thermique de 300 kg de déchets de caoutchouc au cours des 20 minutes est déterminée de la manière suivante :

$$Q \text{ tot} = Q \text{chauf.} + Q \text{décomp.} + Q \text{pertes ,}$$

$$Q \text{ tot} = 1{,}2 \ \{( C p \text{ déchets } M \text{déch.}(T_2 - T_1) + q M \text{déch})\}.$$

$$Q \text{ tot.} = 1{,}2\{( 1{,}4 \text{ kJ/kg } 300 \text{ kg } ( 400 \ ^0C - 20 \ ^0C ) +$$

$$+ \ 600 \text{ kJ/kg } 300 \text{ kg})\} = 407520 \text{ kJ,}$$

où Qtot représente la quantité totale de chaleur nécessaire pour la décomposition thermique des déchets ; Qchauf. représente la chaleur de chauffage des déchets jusqu'à la température de 400 °C ; Q decomp. représente la chaleur utilisée pour la décomposition des déchets ; Qpertes représente les pertes de chaleur qui composent 20 % de la quantité totale de chaleur ; q représente la chaleur spécifique de la décomposition, qui représente pour les déchets de caoutchouc 600 kJ/kg ; Mdéch.= 300 kg représentant la masse des déchets ; T1 = 20 °C et T2 = 400 °C représentant les températures initiale et finale des déchets.

Donc la quantité de chaleur transmise des produits de combustion par la paroi du réacteur n'est pas suffisante pour la décomposition thermique des déchets, c'est pourquoi la quantité de chaleur qui manque 64480 kJ doit être fournie dans le réacteur avec la vapeur surchauffée.

Par conséquent la consommation de la vapeur surchauffée Gvap (Tent= 600 °C, et Tsort = 400 °C, Cvap = 2 kJ/kg °C) représente :

$$Gvap = \{(Qtot. - Q\ pr.\ comb.\ )\ /\ (\ Cvap\quad Tent. -\quad Tsort\ )\}: 1200\ s\ =$$

$$\{(\ 64480\ kJ\ )/\ 2\ kJ/kg\ {}^{0}C\ (\ 600\ {}^{0}C - 400\ {}^{0}C\ )\ \}: 1200\ s\ =$$

$$=\ 0,1344\ \ kg/s\ ,\ (\ 484\ ks/h),$$

où Gvap représente la consommation de vapeur, kg/h ; Cvap représente la capacité thermique spécifique de la vapeur d'eau, soit 2 kJ/kg °C ; Tent, Tsort représentent les températures de la vapeur d'eau à l'entrée du réacteur et à la sortie du réacteur (égale à la température du mélange vapeur-gaz évacué du réacteur).

Le générateur de vapeur 15 alimente en vapeur d'eau le surchauffeur de vapeur 16 par l'intermédiaire du robinet 17 selon un débit de 484 kg /h jusqu'à la température de 600 °C. Pour cela, le combustible provenant de la cuve 9 alimente le brûleur 19 avec un débit de 15 kg/h et brûle. Les produits de combustion sont amenés dans le surchauffeur de vapeur 16. En passant par le surchauffeur de vapeur, les produits de combustion chauffent la vapeur d'eau jusqu'à une température de 600 °C, et ils se refroidissent jusqu'à une température de 200 °C, après quoi on les évacue avec l'aspirateur à fumées 13 dans la cheminée 14.

La vapeur d'eau surchauffée provenant du surchauffeur de vapeur 16 par l'intermédiaire du robinet 20 est fournie dans le réacteur 4 selon un débit de 484 kg/h. La température de surchauffe est contrôlée selon les indications du capteur de température 20. Donc la vapeur surchauffée fournit directement dans le réacteur 4 la chaleur en quantité nécessaire, soit 64480 kJ, au cours des 20 minutes.

Les déchets de caoutchouc se déplacent dans le réacteur 4 et chauffent au contact des parois chaudes du réacteur ainsi que par voie d'échange thermique convectif avec la vapeur d'eau fournie dans le réacteur. Il en résulte une thermolyse des déchets avec dégagement de produits gazeux et de résidus solides de carbone. Les produits gazeux de décomposition des déchets se mélangent avec la vapeur d'eau d'où résulte la formation des produits vapeur-gaz.

Dans notre cas, au cours de la décomposition thermique des déchets de caoutchouc, il y a formation de 40 mass. % de gaz de décomposition et 60 mass. % de résidus solides de carbone, contenant 10 mass. % d'éléments métalliques. Donc au cours de la décomposition thermique de 300 kg de déchets durant 20 minutes, la productivité du réacteur sera de 900 kg/h, avec 360 kg/h de gaz de décomposition qui se forment et 540 kg/h de résidus solides de carbone, contenant 54 kg d'éléments métalliques.

Les gaz de décomposition sont mélangés avec la vapeur d'eau et forment les produits vapeur-gaz en quantité de 484 kg/h + 360 kg/h = 844 kg/h.

Les produits vapeur-gaz formés selon un débit de 844 kg/h sont évacués du réacteur 4 par la sortie 7' via le robinet 85 dans le condenseur 59, où par échange thermique avec l'eau de refroidissement, ils sont condensés et forment un condensat contenant de l'eau et de l'huile.

Dans cet exemple, 80 mass.% des produits vapeur-gaz aboutissent à la formation d'un condensat contenant de l'eau et de l'huile. Donc, dans le condenseur 59 675 kg/h des produits vapeur-gaz se condensent. Le condensat se compose de 454 kg d'eau et 268 kg d'huile. Une partie des vapeurs d'eau représentant 30 kg n'est pas condensée. Une partie des gaz de décomposition des déchets de caoutchouc représentant 92 kg/h n'est pas non plus condensée.

Le condensat est transféré vers le séparateur 60 où l'eau est séparée de l'huile. L'eau en quantité de 454 kg/h, passe par le filtre 61 et est recyclée dans le générateur de vapeur 15 pour la production de vapeur d'eau de travail. L'huile provenant du séparateur 60 est transférée dans l'évaporateur 63 via le robinet 62 avec un débit de 268 kg/h, ; elle est ensuit séparée en une première fraction avec une température d'ébullition inférieure ou égale à 360 °C, représentant 160 kg, et en une deuxième fraction avec une température d'ébullition supérieure à 360 °C, représentant 108 kg. La première fraction provenant de l'évaporateur 63 transite par le robinet 64 avec un débit de 60 kg/h, et est évacuée dans le réservoir de stockage 65, tandis que la deuxième fraction transite par le robinet 66 avec un débit de 108 kg/h et est évacuée dans le réservoir de stockage 67.

Les résidus solides de carbone présents dans le réacteur 4 passent par la sortie 7 équipée de la fermeture rotative 8 selon un débit de 540 kg/h et sont évacués dans le refroidisseur à vis 28 équipé du moteur 29 où ils sont refroidis jusqu'à la température de 20 °C par voie d'échange calorifique avec de l'eau passant dans l'enveloppe 30 du refroidisseur. La température de refroidissement des résidus solides de carbone est contrôlée selon les indications du capteur de température 31.

Les résidus solides de carbone provenant du refroidisseur 28 transitent par la fermeture rotative 32 avec un débit de 540 kg/h jusqu'au séparateur magnétique 33 où le métal est retiré en quantité de 54 kg/h avant que les résidus solides de carbone ainsi purifiés soient stockés dans le réservoir de stockage 34. Les résidus de carbone purifiés des inclusions de métal sont acheminés en quantité de 486 kg/h dans le broyeur 35 et sont broyés avant d'être chargés dans le réservoir de stockage 68.

Les résidus de carbone broyés, présentant des dimensions de particules de 0,2 mm, provenant du réservoir de stockage 68, transitent par le doseur à poids 69 en quantité de 16 kg jusqu'au mélangeur 70. Simultanément la première fraction provenant du réservoir de stockage 65 par le robinet 71 est acheminée en quantité de 160 kg grâce au doseur 72 dans le mélangeur 70. Une fois le mélangeur rempli en résidus de carbone et en première fraction, le tout est mélangé à l'aide du malaxeur 73. Dans ce mélange, la proportion de la première fraction liquide et du résidu de carbone broyé représente 1: 0,1 (160 kg : 16 kg). Le mélange est ensuite transféré à l'aide de la pompe 74 selon un débit de 176 kg/h dans le four cylindrique 75 où il est brûlé avec un coefficient d'excès d'air de 0,35.

Dans cet exemple, la quantité théoriquement nécessaire d'air pour la combustion de 160 kg de première fraction représente 2080 kg (13 kg d'air pour 1 kg de première fraction), et pour la combustion de 16 kg de résidus de carbone, la quantité théoriquement nécessaire d'air représente 192 kg (12 kg pour 1 kg de résidus). Donc, la combustion complète du mélange nécessite une quantité nécessaire d'air de 2272 kg/h.

Dans le four cylindrique 75, le mélange est brûlé avec un coefficient d'excès d'air de 0,35, soit 795 kg/h. La quantité d'air fournie dans le four est contrôlée selon les indications du capteur de consommation d'air 76 présent dans le four 75. La régulation du débit d'air à une valeur de 795 kg/h est obtenue grâce au ventilateur 77.

La combustion incomplète du mélange dans le four cylindrique 75 dégage de la chaleur entraînant la décomposition thermique des hydrocarbures contenus dans la première fraction. Du noir de carbone est ainsi produit en quantité de 25 % de la masse de la première fraction, soit 40 kg/h, et des gaz sont également produits en quantité de 37 % de masse, soit 59 kg/h. Une partie de la première fraction brûle, soit 38 % de la masse (61 kg /h brûlent).

Le carbone des résidus solides brûle partiellement en quantité de 1,4kg/h, et se chauffe partiellement avec l'évacuation des composés sulfurés des résidus de carbone en quantité de 0,1 kg. De cette façon, du noir de carbone est formé en quantité de 40 kg/h + 16,9 kg/h = 56,9 kg/h.

Les flux des produits de la combustion incomplète et du noir de carbone provenant du four 75 sont envoyés respectivement en quantité de 915 kg/h et de 56,9 kg/h dans le réfrigérateur 78 recevant de l'eau pulvérisée provenant de la cuve 79, provoquant la baisse de la température des produits de combustion et du noir de carbone. Le mélange refroidi du réfrigérateur 78 transite par le filtre 80 et subi une séparation mécanique dans un champ centrifuge par un flux de gaz circulant dans le cyclone 81, dégageant le noir de carbone en quantité de 56,9 kg/h et la cendre en quantité de 0,1 kg/h.

Le noir de carbone est transféré par transport pneumatique à l'aide du ventilateur 82 en quantité de 56,9 kg/h dans le réservoir de stockage 83, et la cendre en quantité de 0,1 kg/h est déchargée du cyclone 81 dans le réservoir de stockage 84.

Les gaz du noir de carbone purifiés par le filtre 80 contiennent des composants combustibles et sont brûlés via le robinet 58 en quantité de 915 kg/h dans le brûleur 11.

La deuxième fraction provenant du réservoir de stockage 67 transite par le robinet 87 avec un débit de 108 kg/h jusqu'au four cylindrique 88, où simultanément à l'aide du ventilateur 89, de l'air est introduit. La deuxième fraction est soumise à une décomposition thermique en noir de carbone et en gaz à une température de 850 °C par voie de combustion incomplète (en condition de manque d'air) dans le four cylindrique 88. La température de la combustion est contrôlée selon les indications du capteur de température 90.

La chaleur dégagée lors de la combustion d'une partie de la deuxième fraction provoque la décomposition thermique de la fraction liquide avec formation de suie et de gaz (la chaleur spécifique de la combustion de ces gaz est de 20 MJ/kg). Dans cet exemple, une partie de la deuxième fraction est décomposée avec formation de noir de carbone (32 kg/h), une partie de la deuxième fraction brûle (22 kg/h), la partie de la deuxième fraction qui reste (54 kg) se décompose thermiquement avec formation de gaz combustibles dégageant une chaleur de combustion de 20 MJ/kg.

La température à l'intérieur du four 88 est contrôlée selon les indications du capteur 90 et par la régulation de l'introduction d'air grâce au ventilateur 89 (on augmente l'introduction lors que la température baisse et on diminue l'introduction lorsque la température baisse), on fixe la température à 850 °C. Le flux des produits de combustion et du noir de carbone provenant du four 88 est évacué avec un débit de 372 kg/h dans le réfrigérateur 91, où de l'eau provenant de la cuve 79 est pulvérisée, abaissant la température des produits de combustion et de noir de carbone jusqu'à T=150 °C.

Le mélange refroidi du réfrigérateur 91 est amené dans le filtre 92, où la suie est dégagée du flux gazeux en quantité de 32 kg/h, puis transférée dans le microbroyeur 93, et par transport pneumatique grâce au ventilateur 94, le noir de carbone est acheminée dans le réservoir de stockage 95.

Les gaz du noir de carbone purifiés par le filtre 92 en quantité de 340 kg/h (54 kg de gaz de décomposition de la fraction et 286 kg/h de produits de combustion 22 kg/h de la deuxième fraction) et sont brûlés via les robinets 96 et 58 dans le brûleur 11.

La combustion des gaz dans le brûleur permet d'utiliser efficacement la chaleur de combustion des gaz et de prévenir leur rejet dans l'environnement. Comme la chaleur de combustion des gaz représente 3180 kJ/kg, on les brûle selon un débit de 340 kg/h (ce qui est équivalent, d'après la chaleur de combustion, à la combustion de 27 kg de combustible avec une chaleur spécifique de combustion de 40 MJ/kg). La quantité du combustible brûlé dans le brûleur 11 est réduite à 27 kg/h, puis fixée à 53 kg/h.

Les produits vapeur-gaz, constitués par le mélange de la vapeur d'eau à 30 kg/h et 92 kg/h de gaz non condensés de la décomposition thermique des déchets de caoutchouc provenant du condenseur 59 en quantité de 122 kg/h via les robinet 97 et 58 sont brûlés dans le brûleur 11.

La chaleur spécifique de combustion d'un tel mélange est égale à 17000 kJ/kg, la combustion de 122 kg/h de ce mélange est équivalente, d'après la chaleur de combustion, à la combustion de 51 kg de combustible avec une chaleur spécifique de combustion de 40000 kJ/kg. La quantité du combustible brûlé dans le brûleur 11 est réduite à 51 kg/h, puis fixée à 2 kg /h.

Exemple 4

Dans la trémie 1 équipée des fermetures fermées 2 et 3, on introduit les déchets de caoutchouc broyés en particules de dimensions comprises entre 40 et 50 mm en quantité de 200 kg. Après le remplissage de la trémie 1, on ouvre la fermeture 2, les déchets de la trémie 1 tombent en bas et restent sur la fermeture 3. Après cela, on ferme la fermeture 2, puis on ouvre la fermeture 1 et les déchets tombent dans le réacteur cylindrique 4. Ensuite on ferme la fermeture 3, et on amène dans la trémie 1 une nouvelle portion de déchets en quantité de 200 kg. Une telle séquence d'introduction des déchets est nécessaire pour prévenir l'entrée de grande quantité d'air dans le réacteur, ce qui peut provoquer une explosion.

Simultanément, à l'aide du moteur 5, on met en rotation la vis 6 installée dans le réacteur cylindrique 4. Les déchets broyés sont pris par la vis et entraînés dans le réacteur cylindrique 4 vers la sortie 7 équipée de la fermeture rotative 8. Le temps de déplacement des déchets dans le réacteur cylindrique est régulé par le changement de vitesse des tours de la vis 6 de telle sorte que les déchets parcourent la vise au bout de 20 minutes (temps nécessaire pour la décomposition thermique complète des déchets et le chauffage des résidus solides jusqu'à 500 °C) et arrivent à la sortie 7 équipée de la fermeture rotative 8. Dans cet exemple, la vitesse de rotation de la vis représente 80 tours par heure.

Simultanément à l'initiation du procédé et au déplacement des déchets, on introduit le combustible provenant du réservoir 9 par le robinet régulateur 10 dans le brûleur 11 selon un débit de 60 kg/h et on le brûle. Les produits de combustion sont envoyés dans l'enveloppe 12 du réacteur 4 à une température de 1000 °C et en quantité de 720 kg/h (la combustion de 1 kg de combustible entraîne la formation de 12 kg de produits de combustion). En passant par l'enveloppe 12, les produits de combustion du combustible chauffent le réacteur et à leur tour se refroidissent jusqu'à 200 °C et à l'aide de l'aspirateur de fumées 13 sont évacués dans la cheminée 14.

La quantité de chaleur transmise par la paroi du réacteur de la part des produits de combustion vers les déchets au cours de 20 minutes répond à la formule suivante :

$$Q \, pr. \, comb. = M \, pr. \, comb \quad C \, pr. \, comb \quad (T2 - T1) =$$

$$240 \, kg . 1{,}34 \, kJ/kg \, ^0C \, (1000 \, ^0C - 200 \, ^0C) = 257280 \quad kJ,$$

où M pr. comb. représente la quantité des produits de combustion, soit 240 kg ; C pr. comb. représente la capacité thermique spécifique des produits de combustion, soit 1,34 kJ/kg °C ; T1=1000°C et T2 =200°C représentant la température d'entrée des produits de combustion dans l'enveloppe du réacteur et la température de leur sortie de l'enveloppe.

La quantité nécessaire de chaleur pour la décomposition thermique de 200 kg de déchets de caoutchouc et le chauffage des résidus solides de carbone jusqu'à 500 °C au cours des 20 minutes est déterminée de la manière suivante :

$$Q \, tot = Qchauf. + Qdécomp. + Qpertes,$$

$$Q \, tot = 1{,}2 \, \{(Cp \, dechets \, Mdech.(T2 - T1) + q \, Mdech.)\}.$$

$$Q\text{ tot.} = 1,2\{(\ 1,4 \text{ kJ/kg } 200 \text{ kg } (\ 500\ ^0C - 20\ ^0C\ ) +$$
$$+\ \ 600 \text{ kJ /kg } 200 \text{ kg})\} =\ 305280 \text{ kJ,}$$

où Qtot représente la quantité totale de chaleur nécessaire pour la décomposition thermique des déchets ; Qchauf. représente la chaleur de chauffage des déchets jusqu'à la température de 500 °C ; Q decomp. représente la chaleur utilisée pour la décomposition des déchets ; Qpertes représente les pertes de chaleur qui composent 20 % de la quantité totale de chaleur ; q représente la chaleur spécifique de la décomposition, qui représente pour les déchets de caoutchouc 600 kJ/kg ; Mdéch.= 300 kg représentant la masse des déchets ; T1 = 20 °C et T2 = 500 °C représentant les températures initiale et finale des déchets.

Donc la quantité de chaleur transmise des produits de combustion par la paroi du réacteur n'est pas suffisante pour la décomposition thermique des déchets, c'est pourquoi la quantité de chaleur qui manque 48000 kJ doit être fournie dans le réacteur avec la vapeur surchauffée.

Par conséquent la consommation de la vapeur surchauffée Gvap (Tent= 700 °C, et Tsort = 400 °C, Cvap = 2 kJ/kg °C) représente :

$$Gvap = \{(Qtot\ - Q \text{ pr. comb. }) /\ (\ Cvap\ \ Tentr. -\ \ Tsort. )\}: 1200 \text{ s } =$$
$$\{(\ 48000 \text{ kJ })/ (2 \text{ kJ/kg }\ ^0C\ (\ 700\ ^0C - 500\ ^0C\ )\ \} : 1200 \text{ s } = 360 \text{ kg /h}$$

où Gvap représente la consommation de vapeur, kg/h ; Cvap représente la capacité thermique spécifique de la vapeur d'eau, soit 2 kJ/kg °C ; Tent, Tsort représentent les températures de la vapeur d'eau à l'entrée du réacteur et à la sortie du réacteur (égale à la température du mélange vapeur-gaz évacué du réacteur).

Le générateur de vapeur 15 alimente en vapeur d'eau le surchauffeur de vapeur 16 par l'intermédiaire du robinet 17 selon un débit de 360 kg /h jusqu'à la température de 700 °C. Pour cela, le combustible provenant de la cuve 9 alimente le brûleur 19 avec un débit de 13 kg/h et brûle. Les produits de combustion sont amenés dans le surchauffeur de vapeur 16. En passant par le surchauffeur de vapeur, les produits de combustion chauffent la vapeur d'eau jusqu'à une température de 700 °C, et ils se refroidissent jusqu'à une température de 200 °C, après quoi on les évacue avec l'aspirateur à fumées 13 dans la cheminée 14.

La vapeur d'eau surchauffée provenant du surchauffeur de vapeur 16 par l'intermédiaire du robinet 20 est fournie dans le réacteur 4 selon un débit de 360 kg/h. La température de surchauffe est contrôlée selon les indications du capteur de température 20. Donc la vapeur surchauffée fournit directement dans le réacteur 4 la chaleur en quantité nécessaire, soit 48000 kJ, au cours des 20 minutes.

Les déchets de caoutchouc se déplacent dans le réacteur 4 et chauffent au contact des parois chaudes du réacteur ainsi que par voie d'échange thermique convectif avec la vapeur d'eau fournie dans le réacteur. Il en résulte une thermolyse des déchets avec dégagement de produits gazeux et de résidus solides de carbone. Les produits gazeux de décomposition des déchets se mélangent avec la vapeur d'eau d'où résulte la formation des produits vapeur-gaz.

Dans notre cas, au cours de la décomposition thermique des déchets de caoutchouc, il y a formation de 45 mass. % de gaz de décomposition et 55 mass. % de résidus solides de carbone, contenant 10 mass. % d'éléments métalliques. Donc au cours de la décomposition thermique de 200 kg de déchets durant 20 minutes, la productivité du réacteur sera de 600 kg/h, avec 270 kg/h de gaz de décomposition qui se forment et 330 kg/h de résidus solides de carbone, contenant 33 kg d'éléments métalliques.

Les gaz de décomposition sont mélangés avec la vapeur d'eau et forment les produits vapeur-gaz en quantité de 270 kg/h + 360 kg/h = 630 kg/h.

Les produits vapeur-gaz formés selon un débit de 630 kg/h sont évacués du réacteur 4 par la sortie 7' via le robinet 85 dans le condenseur 59, où par échange thermique avec l'eau de refroidissement, ils sont condensés et forment un condensat contenant de l'eau et de l'huile.

Dans cet exemple, 80 mass.% des produits vapeur-gaz aboutissent à la formation d'un condensat contenant de l'eau et de l'huile. Donc, dans le condenseur 59 504 kg/h des produits vapeur-gaz se condensent. Le condensat se compose de 340 kg d'eau et 243 kg d'huile. Une partie des vapeurs d'eau représentant 20 kg n'est pas condensée. Une partie des gaz de décomposition des déchets de caoutchouc représentant 27 kg/h n'est pas non plus condensée.

Le condensat est transféré vers le séparateur 60 où l'eau est séparée de l'huile. L'eau en quantité de 340 kg/h, passe par le filtre 61 et est recyclée dans le générateur de vapeur 15 pour la production de vapeur d'eau de travail. L'huile provenant du séparateur 60 est transférée dans l'évaporateur 63 via le robinet 62 avec un débit de 243 kg/h, ; elle est ensuit séparée en une première fraction avec une température d'ébullition inférieure ou égale à 360 °C, représentant 150 kg, et en une deuxième fraction avec une température d'ébullition supérieure à 360 °C, représentant 93 kg.

La première fraction provenant de l'évaporateur 63 transite par le robinet 64 avec un débit de 150 kg/h, et est évacuée dans le réservoir de stockage 65, tandis que la deuxième fraction transite par le robinet 66 avec un débit de 93 kg/h et est évacuée dans le réservoir de stockage 67.

Les résidus solides de carbone présents dans le réacteur 4 passent par la sortie 7 équipée de la fermeture rotative 8 selon un débit de 330 kg/h et sont évacués dans le refroidisseur à vis 28 équipé du moteur 29 où ils sont refroidis jusqu'à la température de 20 °C par voie d'échange calorifique avec de l'eau passant dans l'enveloppe 30 du refroidisseur. La température de refroidissement des résidus solides de carbone est contrôlée selon les indications du capteur de température 31.

Les résidus solides de carbone provenant du refroidisseur 28 transitent par la fermeture rotative 32 avec un débit de 330 kg/h jusqu'au séparateur magnétique 33 où le métal est retiré en quantité de 33 kg/h avant que les résidus solides de carbone ainsi purifiés soient stockés dans le réservoir de stockage 24. Les résidus de carbone purifiés des inclusions de métal sont acheminés en quantité de 297 kg/h dans le broyeur 35 et sont broyés en particules de dimensions de 0,2 mm ou moins, avant d'être chargés dans le réservoir de stockage 68.

Les résidus de carbone broyés provenant du réservoir de stockage 68, transitent par le doseur à poids 69 en quantité de 290 kg jusqu'au mélangeur 70. Simultanément la première fraction provenant du réservoir de stockage 65 par le robinet 71 est acheminée en quantité de 145 kg grâce au doseur 72 dans le mélangeur 70. Une fois le mélangeur rempli en résidus de carbone et en première fraction, le tout est mélangé à l'aide du malaxeur 73. Dans ce mélange, la proportion de la première fraction liquide et du résidu de carbone broyé représente 1: 2 (145 kg : 290 kg). Le mélange est ensuite transféré à l'aide de la pompe 74 selon un débit de 435 kg/h dans le four cylindrique 75 où il est brûlé avec un coefficient d'excès d'air de 0,2.

Dans cet exemple, la quantité théoriquement nécessaire d'air pour la combustion de 145 kg de première fraction représente 1885 kg (13 kg d'air pour 1 kg de première fraction), et pour la combustion de 290 kg de résidus de carbone, la quantité théoriquement nécessaire d'air représente 3480 kg (12 kg pour 1 kg de résidus). Donc, la combustion complète du mélange nécessite une quantité nécessaire d'air de 5365 kg/h.

Dans le four cylindrique 75, le mélange est brûlé avec un coefficient d'excès d'air de 0,2, soit 1073 kg/h. La quantité d'air fournie dans le four est contrôlée selon les indications du capteur de consommation d'air 76 présent dans le four 75. La régulation du débit d'air à une valeur de 1073 kg/h est obtenue grâce au ventilateur 77.

La combustion incomplète du mélange dans le four cylindrique 75 dégage de la chaleur entraînant la décomposition thermique des hydrocarbures contenus dans la première fraction. Du noir de carbone est ainsi produite en quantité de 25 % de la masse de la première fraction, soit 36 kg/h, et des gaz sont également produits en quantité de 25 % de masse, soit 36 kg/h. Une partie de la première fraction brûle, soit 50 % de la masse (72,5 kg /h brûlent).

Le carbone des résidus solides brûle partiellement en quantité de 10 kg/h, et se chauffe partiellement avec l'évacuation des composés sulfurés des résidus de carbone en quantité de 6 kg/h. De cette façon, du noir de carbone est formé en quantité de 36 kg/h + 274 kg/h = 310 kg/h.

Les flux des produits de la combustion incomplète et du noir de carbone provenant du four 75 sont envoyés respectivement en quantité de 1198 kg/h et de 310 kg/h dans le réfrigérateur 78 recevant de l'eau pulvérisée provenant de la cuve 79, provoquant la baisse de la température des produits de combustion et du noir de carbone. Le mélange refroidi du réfrigérateur 78 transite par le filtre 80 et subi une séparation mécanique dans un champ centrifuge par un flux de gaz circulant dans le cyclone 81, dégageant du noir de carbone en quantité de 290 kg/h et la cendre en quantité de 20 kg/h.

Le noir de carbone est transféré par transport pneumatique à l'aide du ventilateur 82 en quantité de 290 kg/h dans le réservoir de stockage 83, et la cendre en quantité de 20 kg/h est déchargée du cyclone 81 dans le réservoir de stockage 84.

Les gaz du noir de carbone purifiés par le filtre 80 contiennent des composants combustibles et sont brûlés via le robinet 58 en quantité de 888 kg/h dans le brûleur 11.

La deuxième fraction provenant du réservoir de stockage 67 transite par le robinet 87 avec un débit de 93 kg/h jusqu'au four cylindrique 88, où simultanément à l'aide du ventilateur 89, de l'air est introduit. La deuxième fraction est soumise à une décomposition thermique en noir de carbone et en gaz à une température de 2500 °C par voie de combustion incomplète (en condition de manque d'air) dans le four cylindrique 88. La température de la combustion est contrôlée selon les indications du capteur de température 90.

La chaleur dégagée lors de la combustion d'une partie de la deuxième fraction provoque la décomposition thermique de la fraction liquide avec formation de suie et de gaz (la chaleur spécifique de la combustion de ces gaz est de 20 MJ/kg).

Dans cet exemple, une partie de l'huile est décomposée avec formation de noir de carbone (30 % de la masse de l'huile, soit 28 kg/h), une partie de l'huile brûle (20 % de la masse de l'huile, soit 20 kg/h), la partie de l'huile qui reste (près de 50 % de la masse de l'huile, soit 45 kg) se décompose thermiquement avec formation de gaz combustibles dégageant une chaleur de combustion de 20 MJ/kg.

La température à l'intérieur du four 88 est contrôlée selon les indications du capteur 90 et par la régulation de l'introduction d'air grâce au ventilateur 89 (on augmente l'introduction lors que la température baisse et on diminue l'introduction lorsque la température baisse), on fixe la température à 2500 °C. Le flux des produits de combustion et du noir de carbone provenant du four 88 est évacué avec un débit de 333 kg/h dans le réfrigérateur 91, où de l'eau provenant de la cuve 79 est pulvérisée, abaissant la température des produits de combustion et de noir de carbone jusqu'à T=150 °C.

Le mélange refroidi du réfrigérateur 91 est amené dans le filtre 92, où la suie est dégagée du flux gazeux en quantité de 28 kg/h, puis transférée dans le microbroyeur 93, et par transport pneumatique grâce au ventilateur 94, la suie est acheminée dans le réservoir de stockage 95.

Les gaz du noir de carbone purifiés par le filtre 92 en quantité de 305 kg/h (produits de combustion 20 kg/h de l'huile 260 kg/h, gaz de décomposition thermique de la deuxième fraction 45 kg/h) et sont brûlés via les robinets 96 et 58 dans le brûleur 11.

La combustion des gaz dans le brûleur permet d'utiliser efficacement la chaleur de combustion des gaz et de prévenir leur rejet dans l'environnement. Comme la chaleur de combustion des gaz représente 44000 kJ/kg, on les brûle selon un débit de 305 kg/h (ce qui est équivalent, d'après la chaleur de combustion, à la combustion de 33 kg de combustible avec une chaleur spécifique de combustion de 40 MJ/kg). La quantité du combustible brûlé dans le brûleur 11 est réduite à 33 kg/h, puis fixée à (60 kg/h - 33 kg/h) = 27 kg/h.

Les produits vapeur-gaz, constitués par le mélange de la vapeur d'eau à 20 kg/h et 27 kg/h de gaz non condensés de la décomposition thermique des déchets de caoutchouc provenant du condenseur 59 en quantité de 47 kg/h via les robinet 97 et 58 sont brûlés dans le brûleur 11.

La chaleur spécifique de combustion d'un tel mélange est égale à 17000 kJ/kg, la combustion de 47 kg/h de ce mélange est équivalente, d'après la chaleur de combustion, à la combustion de 20 kg de combustible avec une chaleur spécifique de combustion de 40000 kJ/kg. La quantité du combustible brûlé dans le brûleur 11 est réduite à 20 kg/h, puis fixée à 7 kg /h.

Le mélange soumis à la combustion commune contient les gaz de la décomposition thermique de la deuxième fraction, les produits de la combustion incomplète du mélange (la première fraction et le résidu de carbone broyé), les gaz de décomposition thermique des déchets de caoutchouc et la vapeur d'eau. Lors de la combustion d'un tel mélange , les rejets d'oxydes d'azote sont réduits en raison de la présence de la vapeur d'eau, ce qui entraîne une réduction des rejets dans l'environnement au cours du procédé d'obtention de noir de carbone à partir de déchets de caoutchouc selon l'invention.

Grâce à l'utilisation d'une partie des déchets de caoutchouc pour l'approvisionnement en énergie du procédé d'obtention de noir de carbone selon l'invention, on obtient une réduction de la consommation énergétique, ce qui en comparaison avec les technologies connues de production de noir de carbone exclut la nécessité de combustible supplémentaire. La combustion d'une partie des déchets de caoutchouc en forme gazeuse assure la combustion plus complète et la réduction de la formation des composés toxiques par rapport aux technologies de combustion directe des déchets de caoutchouc.

**Revendications**

1. Méthode d'obtention de noir de carbone à partir de déchets de caoutchouc, comprenant leur décomposition thermique dans un réacteur, la séparation des produits de décomposition en produits vapeur-gaz et en résidus solides carboniques, le broyage des résidus de carbones, la combustion des produits vapeur-gaz avec les résidus de carbone broyés par la voie de l'amenée dans la chambre de combustion des produits vapeur-gaz, *caractérisée en ce que* le rapport de consommation de masse des produits vapeur-gaz et des résidus de carbone broyés est compris entre 1: (0,1 - 2).

2. Méthode d'obtention de noir de carbone à partir de déchets de caoutchouc selon la revendication 1, *caractérisée en ce que* les produits vapeur-gaz sont brûlés avec les résidus de carbone broyés sous une forme gazeuse ou sous une forme liquide après condensation.

3. Méthode d'obtention de noir de carbone à partir de déchets de caoutchouc selon la revendication 2, *caractérisée en ce que* les produits vapeur-gaz condensés sous forme liquide sont séparés en une première fraction présentant un point d'ébullition inférieur ou égal à 360 °C et en une deuxième fraction présentant un point d'ébullition supérieur à 360 °C, la première fraction étant mélangée avec les résidus de carbone broyés dans un rapport de 1: (0,1- 2,0), le mélange obtenu étant brûlé, les produits de combustion étant séparés par voie mécanique dans un champ centrifuge en suie et en cendre.

4. Méthode d'obtention de noir de carbone à partir de déchets de caoutchouc selon la revendication 3, *caractérisée*

*en ce que* la deuxième fraction est soumise à une décomposition thermique en suie et en gaz selon des températures comprises entre 850 à 2100°C.

5. Méthode d'obtention de noir de carbone à partir de déchets de caoutchouc selon la revendication 3, *caractérisée en ce que* la combustion du mélange de la première fraction et des résidus de carbone est réalisée avec un coefficient d'excès d'air compris entre 0,20 et 0,35.

6. Méthode d'obtention de noir de carbone à partir de déchets de caoutchouc selon l'une quelconque des revendications précédentes, *caractérisée en ce que* les résidus de carbone sont broyés pour obtenir des particules de dimensions comprises entre 0,1 et 2,0 mm.

7. Méthode d'obtention de noir de carbone à partir de déchets de caoutchouc selon l'une quelconque des revendications précédentes, *caractérisée en ce que* tout ou partie des résidus de carbone broyés est transportée dans la chambre de combustion par l'intermédiaire des produits vapeur-gaz.

8. Méthode d'obtention de noir de carbone à partir de déchets de caoutchouc selon l'une quelconque des revendications 3 à 7, *caractérisée en ce que* les gaz provenant de la décomposition thermique de la deuxième fraction et les produits de combustion du mélange sont brûlés ensemble avec les produits vapeur-gaz, et l'énergie thermique obtenue est utilisée pour assurer la décomposition thermique des déchets de caoutchouc dans le réacteur.

9. Dispositif pour l'obtention de noir de carbone à partir de déchets de caoutchouc *caractérisé en ce qu'*il comprend un réacteur (4) présentant une sortie (7) pour les résidus de carbone connectée consécutivement à un échangeur thermique à vis (28), un séparateur magnétique (33), un broyeur (35), un convoyeur (36), une trémie (37) avec doseur (38), un échangeur thermique tubulaire (39), un brûleur turbulent (45) installé au bout d'un four cylindrique (26) sur l'axe d'une chambre de combustion (27), une sortie (7') pour les produits vapeur-gaz du réacteur (4) étant connectée aux brûleurs (24,25) du four cylindrique (26) installés tangentiellement et de manière diamétralement opposée à la chambre de combustion (27), ladite sortie (7') étant également connectée consécutivement à l'échangeur thermique (39) de la trémie (37) avec le doseur (38) et au brûleur turbulent (45).

## Patentansprüche

1. Verfahren zum Erhalten von Ruß aus Altgummi aufweisend deren thermische Zersetzung in einem Reaktor, das Separieren der Aufgabeprodukte in Dampf-GasProdukte und feste Kohlenstoffrückstände, das Zerkleinern der Kohlenstoffrückstände, die Verbrennung der Dampf-Gasprodukte mit den zerkleinerten Kohlenstoffrückständen durch Zuführung in eine Verbrennungskammer der Dampf-Gas-Produkte,
   **dadurch gekennzeichnet,**
   **dass** das Massenverzehrverhältnis der Dampf-GasProdukte und der zerkleinerten Kohlenstoffrückstände zwischen 1:(0,1 bis 2) liegt.

2. Verfahren zum Erhalten von Ruß aus Altgummi nach Anspruch 1,
   **dadurch gekennzeichnet,**
   **dass** die Dampf-Gasprodukte mit den zerkleinerten Kohlenstoffrückständen in einer gasförmigen Form oder in einer flüssigen Form nach Kondensation verbrannt werden.

3. Verfahren zum Erhalten von Ruß aus Altgummi nach Anspruch 2,
   **dadurch gekennzeichnet,**
   **dass** die Dampf-Gasprodukte in eine erste Fraktion, welche einen Siedepunkt unter oder gleich 360°C und eine zweite Fraktion, welche einen Siedepunkt über 360°C haben, separiert wird, wobei die erste Fraktion mit den zerkleinerten Kohlenstoffrückständen in einem Verhältnis von 1:(0,1 bis 2,0) vermengt wird, wobei die erhaltene Mischung verbrannt wird, wobei die Verbrennungsprodukte auf mechanischem Wege in einem Zentrifugenfeld in Ruß und Asche separiert werden.

4. Verfahren zum Erhalten von Ruß aus Altgummi nach Anspruch 3,
   **dadurch gekennzeichnet,**
   **dass** die zweite Fraktion einer thermischen Zersetzung in Ruß und Gas bei einer Temperatur zwischen 850°C und 2.100°C unterzogen wird.

**5.** Verfahren zum Erhalten von Ruß aus Altgummi nach Anspruch 3,
**dadurch gekennzeichnet,**
**dass** die Verbrennung der Mischung der ersten Fraktion und der Kohlenstoffrückstände mit einer Luftüberschusszahl zwischen 0,20 und 0,35 realisiert wird.

**6.** Verfahren zum Erhalten von Ruß aus Altgummi nach einem der voranstehenden Ansprüche,
**dadurch gekennzeichnet,**
**dass** die Kohlenstoffrückstände zerkleinert werden um Partikel mit der Größe zwischen 0,1 und 2,0mm zu erhalten.

**7.** Verfahren zum Erhalten von Ruß aus Altgummi nach einem der voranstehenden Ansprüche,
**dadurch gekennzeichnet,**
**dass** alle oder ein Teil der zerkleinerten Kohlenstoffrückstände in der Verbrennungskammer durch das Dampf-Gasprodukt transportiert werden.

**8.** Verfahren zum Erhalten von Ruß aus Altgummi nach einem der Ansprüche 3 bis 7,
**dadurch gekennzeichnet,**
**dass** die Gase aus der thermischen Zersetzung der zweiten Fraktion und die Verbrennungsprodukte der Mischung zusammen mit den Dampf-Gasprodukten verbrannt werden und die thermische Energie, welcher erhalten wird, verwendet wird um die thermische Zersetzung des Altgummis in den Reaktoren zu erreichen.

**9.** Vorrichtung zum Erhalten von Ruß aus Altgummi,
**dadurch gekennzeichnet,**
**dass** sie einen Reaktor (4) mit einem Auslass (7) für die Kohlenstoffrückstände, welcher anschließend mit einem Wärmeaustauscher mit Einzugsschnecke (28) verbunden ist, einen Magnetabscheider (33), einen Zerkleinerer (35), einen Förderer (36), einen Einlauftrichter (37) mit Dosierung (38), einen rohrförmigen Wärmetauscher (39), einen turbulenten Brenner (45), welcher am Ende eines zylindrischen Ofens (26) in einer Achse der Verbrennungskammer (27) angeordnet ist, ein Auslass (7') für die Dampf-Gasprodukte des Reaktors (4), welcher mit den Brennern (24, 25) des zylindrischen Ofens (26) verbunden ist, welche tangential diametral gegenüberliegend in der Verbrennungskammer (27) angebracht sind, aufweist, wobei der Auslass (7') ebenso nachfolgend mit dem Wärmetauscher (39) des Trichters (37) mit Dosierung (38) und mit dem turbulenten Brenner (45) verbunden ist.

**Claims**

**1.** Method for obtaining carbon black from waste rubber, including thermal decomposition thereof in a reactor, separation of the decomposition products into gas-vapor products and solid carbon residues, crushing of the carbon residues, combustion of the gas-vapor products with the crushed carbon residues by means of supplying the gas-vapor products into the combustion chamber, *characterized in that* the mass consumption ratio of the gas-vapor products and of the crushed carbon residues is between 1:(0.1-2).

**2.** Method for obtaining carbon black from waste rubber according to Claim 1, *characterized in that* the gas-vapor products are burned with the crushed carbon residues in gaseous form or in liquid form after condensation.

**3.** Method for obtaining carbon black from waste rubber according to Claim 2, *characterized in that* the gas-vapor products condensed in liquid form are separated into a first fraction having a boiling point less than or equal to 360°C and a second fraction having a boiling point greater than 360°C, the first fraction being mixed with the crushed carbon residues in a ratio of 1:(0.1-2.0), the resulting mixture being burned, the combustion products being separated mechanically in a centrifugal force field into soot and ash.

**4.** Method for obtaining carbon black from waste rubber according to Claim 3, *characterized in that* the second fraction undergoes thermal decomposition into soot and gas at temperatures between 850 and 2100°C.

**5.** Method for obtaining carbon black from waste rubber according to Claim 3, *characterized in that* the combustion of the mixture of the first fraction and the carbon residues is carried out with an excess air coefficient between 0.20 and 0.35.

**6.** Method for obtaining carbon black from waste rubber according to any of the preceding claims, *characterized in that* the carbon residues are crushed to obtain particles of sizes between 0.1 and 2.0 mm.

7. Method for obtaining carbon black from waste rubber according to any of the preceding claims, ***characterized in that*** some or all of the crushed carbon residues is transported into the combustion chamber by means of gas-vapor products.

8. Method for obtaining carbon black from waste rubber according to any of Claims 3 through 7, ***characterized in that*** the gases from the thermal decomposition of the second fraction and the combustion products of the mixture are burned together with the gas-vapor products, and the thermal energy obtained is used for ensuring the thermal decomposition of the waste rubber in the reactor.

9. Device for obtaining carbon black from waste rubber, ***characterized in that*** it comprises a reactor (4) having an outlet (7) for the carbon residues which is consecutively connected to a screw heat exchanger (28), a magnetic separator (33), a mill (35), a conveyor (36), a hopper (37) with a metering unit (38), a tube heat exchanger (39), a turbulent burner (45) mounted at the end of a cylindrical furnace (26) on the axis of a combustion chamber (27), an outlet (7') for the gas-vapor products of the reactor (4) being connected to the burners (24,25) of the cylindrical furnace (26) which are mounted tangentially and diametrically opposite the combustion chamber (27), said outlet (7') also being consecutively connected to the heat exchanger (39) of the hopper (37) with the metering unit (38) and to the turbulent burner (45).

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5087436 A
- RU 2269415
- RU 2174911
- RU 2139187
- RU 2352600
- RU 747868
- EP 0693539 A
- RU 2276170